(19) **Europäisches Patentamt / European Patent Office / Office européen des brevets**

(11) **EP 4 325 683 A1**

(12) **EUROPEAN PATENT APPLICATION**
published in accordance with Art. 153(4) EPC

(43) Date of publication:
**21.02.2024 Bulletin 2024/08**

(21) Application number: **22938141.3**

(22) Date of filing: **20.07.2022**

(51) International Patent Classification (IPC):
*H02J 3/00* (2006.01)

(86) International application number:
**PCT/CN2022/106680**

(87) International publication number:
**WO 2023/201916 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.04.2022 CN 202210401812**

(71) Applicant: **State Grid Smart Grid Research Institute Co., Ltd.**
**Beijing 102209 (CN)**

(72) Inventors:
• **WU, Junmin**
  **Beijing 102209 (CN)**
• **LIU, Chuan**
  **Beijing 102209 (CN)**
• **CHEN, Lei**
  **Beijing 102209 (CN)**
• **LIU, Ying**
  **Beijing 102209 (CN)**
• **HOU, Zhansheng**
  **Beijing 102209 (CN)**
• **TAO, Jing**
  **Beijing 102209 (CN)**
• **LIU, Shidong**
  **Beijing 102209 (CN)**

(74) Representative: **White, Andrew John**
  **Mathys & Squire**
  **The Shard**
  **32 London Bridge Street**
  **London SE1 9SG (GB)**

(54) **DISTRIBUTED FLEXIBLE RESOURCE AGGREGATION CONTROL APPARATUS AND CONTROL METHOD**

(57) The application discloses an aggregation control apparatus and method for distributed flexible resources, and the control apparatus includes a processing control unit achieving uplink connection and downlink connection through a communication unit, and connected to processing control units of other aggregation control apparatuses for distributed flexible resources through the communication unit, to achieve an edge ad-hoc network, so that regional-level coordination and autonomy of the distributed flexible resources are achieved at an edge end, and complex differences caused by massive distributed resources accessing to heterogeneous networks, miscellaneous protocols and different response capabilities may be effectively shielded; and the processing control unit uniformly aggregates and finely processes multiple types of distributed resources through an energy flow regulation method, so that large-scale access capabilities of the distributed flexible resources is effectively improved, edge response capability of aggregation regulation is improved, and balance adjustment capability of a power grid to which high-proportion new energies access is improved.

FIG. 2

**Description**

CROSS-REFERENCE TO RELATED APPLICATIONS

This application is filed based on and claims priority to Chinese Patent application No. 202210401812.1 filed on April 18, 2022 by STATE GRID SMART GRID RESEARCH INSTITUTE CO., LTD. and entitled "AGGREGATION CONTROL APPARATUS AND METHOD FOR DISTRIBUTED FLEXIBLE RESOURCES", the contents of which are hereby incorporated by reference in its entirety.

TECHNICAL FIELD

The application relates to the field of digitization of a power grid, and relates to but is not limited to an aggregation control apparatus and method for distributed flexible resources.

BACKGROUND

Cleanliness of energy production, electrification of energy consumption, and high efficiency of energy utilization present a trend of accelerating development, and demands for large-scale distributed flexible resources to participate in interactive regulation of a power grid become more and more urgent. On one hand, since operation of a new-type power system presents characteristics of "double high and double peaks", construction of a virtual and flexible adjustment power supply meeting multi-time scale regulation demands of the power system such as "emergency control, conventional frequency adjustment, and flexible peak shaving" or the like is an important means to support safe and stable operation of the new-type power system dominated by new energies, it is urgent to use advanced technologies to integrate and coordinate distributed flexible resources, carry out operation and control optimization and market transactions, and achieve multi-energy complementation on the power supply side and flexible interaction on the load side. On the other hand, development of the Internet of Things makes more and more loads become controllable loads, such as smart home appliances, electric vehicles, controllable industrial loads, etc. Smart home appliances are developing in a direction that they may be remotely controlled through the Internet. Control terminals for controllable industrial loads and charging and discharging electric vehicles may be physically contacted by users. Furthermore, safety and protection measures on the load side are weak or missing, so that the controllable loads is very easy to be maliciously controlled by attackers, to achieve a purpose of affecting safe and stable operation of the power grid. When a large number of loads are maliciously controlled to be in service and out of service simultaneously or frequently, loads of a power distribution network will fluctuate abnormally, which not only threatens reliability and quality of the power supply, but also may affect safe and stable operation of a power transmission network, especially in an active power distribution network with high penetration of distributed energies.

With the rapid development of power substitution on the user side, due to lack of flexible access and aggregated regulation capabilities for flexible resources, it is difficult for the power grid to fully tap potentials of scattered resources on massive user sides to meet multi-time scale flexible backup demands of the new-type power system on the adjustment power supply, which specifically present in: (1) communication modes of user side resources are heterogeneous, access to discrete massive resources is complex, part of resources are not fully covered by communication, and degrees of access and management are not high, which causes the part of resources not "wake up" really to participate in real-time interaction with the power grid; (2) most of demand-side adjustable resource assets belong to users, and access thereof is mostly achieved by renting communication links of public operators, since the opening degree of the operator's network management interface is low, "observable, measurable and controllable" degrees of the communication network and link are low; (3) due to lack of a distributed resource aggregation model considering communication delay, current output of aggregation reporting is mostly based on static data provided during registration, and does not consider real-time operation state of resources, it is difficult for a scheduling center to grasp real-time adjustable capabilities of subordinate resources, and it is difficult to achieve accurate control of distributed resources.

SUMMARY

Therefore, the technical problem to be solved by the application is to overcome defects in the related art that due to lack of flexible access and aggregated regulation capabilities for flexible resources, it is difficult for the power grid to fully tap potentials of scattered resources on massive user sides, thereby providing an aggregation control apparatus and method for distributed flexible resources.

In order to achieve the above purpose, the application provides technical solutions as follows.

According to a first aspect, an embodiment of the application provides an aggregation control apparatus for distributed flexible resources, the aggregation control apparatus includes a communication unit and a processing control unit. The processing control unit achieves uplink (UL) connection and downlink (DL) connection through the communication unit, and is connected to processing control units of other aggregation control apparatuses for distributed flexible resources through the communication unit, to achieve an edge ad-hoc network. The processing control unit is configured to support scheduling and control services to achieve real-time demand response, low-power consumption massive-scale deployment, and intelligent grid-connection/disconnection of micro-grid. The processing control unit is further configured to: establish a model of each type of the distributed flexible resources, and establish a comprehensive objective function including economy, low carbon and low fluctuation, and a real-time power balance constraint condition and a resource response quantity constraint condition in combination with the model of each type of the distributed flexible resources; optimally solve the comprehensive objective function based on the real-time power balance constraint condition and the resource response quantity constraint condition, to obtain a power scheduling result in each response period; and schedule the distributed flexible resources based on the scheduling result.

In an embodiment, the communication unit may include multiple types of communication modules. The distributed flexible resources are directly connectable to corresponding types of communication modules, or connectable to the corresponding types of communication modules through an execution terminal, or connectable to the corresponding types of communication modules through a local local-area autonomous system; all the communication modules are connected to the processing control unit.

In an embodiment, the processing control unit may include an energy flow regulation module and a communication control module. The energy flow regulation module is directly or indirectly connectable to the distributed flexible resources, and is connectable to an UL service system platform and an apparatus management system, and the energy flow regulation module is configured to: establish the model of each type of the distributed flexible resources, and establish the comprehensive objective function including economy, low carbon and low fluctuation, and the real-time power balance constraint condition and the resource response quantity constraint condition in combination with the model of each type of the distributed flexible resources; and optimally solve the comprehensive objective function based on the real-time power balance constraint condition and the resource response quantity constraint condition, to obtain the power scheduling result in each response period. The communication control module is directly or indirectly connectable to the distributed flexible resources, and is connected to the energy flow regulation module, and the communication control module is configured to: support the real-time demand response of the scheduling and control services, the low-power consumption massive-scale deployment, and the intelligent grid-connection/disconnection of the micro-grid; and schedule the distributed flexible resources according to the scheduling result.

In an embodiment, the energy flow regulation module may include a distributed power supply twinning model module, a resource clustering model module, a multi-objective energy flow regulation strategy module, and an external parameter input module. The distributed power supply twinning model module is configured to construct a distributed power supply digital twinning model for distributed flexible resources of connected wind and photovoltaic micro-elements based on weather information and seasonal information input by external parameters, to obtain a distribution curve of wind and photovoltaic combined output. The resource clustering model module is configured to cluster connected massive distributed flexible resources to obtain multiple types of distributed flexible resources. The multi-objective energy flow regulation strategy module is configured to: establish the comprehensive objective function including economy, low carbon and low fluctuation, and the real-time power balance constraint condition and the resource response quantity constraint condition by combining the model of each type of the distributed flexible resources and electricity price information input by the external parameter input module; and optimally solve the comprehensive objective function based on the real-time power balance constraint condition and the resource response quantity constraint condition, to obtain the power scheduling result in each response period.

In an embodiment, the communication control module may include a delay measurement and control module, an intelligent sleep module, a self-learning intelligent decision-making networking module, and a hardware dual-channel host/standby separation control communication module. The delay measurement and control module is configured to: capture data packets of a data link layer in real time, perform layer-by-layer header parsing operations on the data packets, and send the data packets to an application layer for processing, to obtain processed data packets; and perform protocol analysis, Internet Protocol (IP) address analysis and port analysis on the processed data packets at a network layer and the application layer; set a highest control authority for a specific control packet, prioritize processing and forwarding the specific control packet, construct a delay accurate control and measurement algorithm, measure delay information, print the delay information to the data packets, recalculate check values of headers of analyzed data packets, and output the check values to a target device. The intelligent sleep module is configured to establish a power consumption model of the communication unit in real time, and schedule the communication module in real time based on the power consumption model of the communication unit, according to a service interaction frequency and through an intelligent sleep algorithm, to achieve optimization of energy consumption. The self-learning intelligent decision-making networking module is configured to: regularly sense, monitor and issue apparatus state packets, elect a master gateway device when there is a grid-connection/disconnection demand, and perform identity registration to all processing control units in the network after successfully electing the master gateway device; achieve self-election of the master gateway device by taking network characteristic values as a determination basis and through an intelligent decision-making algorithm, and dynamically control input or output of distributed flexible resources in an area; and perform grid-connection/disconnection management of devices, the master gateway device recalculates and modifies micro-grid characteristic values according to an output result of the intelligent decision-making algorithm, and other slave devices execute a slave device strategy. The hardware dual-channel host/standby separation control communication module is configured to: exchange high-speed big data and low-speed control instructions with a master station and other processing control units; monitor rate and abnormal conditions of a main data channel and corresponding requests of a control channel, and issue communication resource scheduling and control instructions to perform communication resource scheduling, the gateway side responds thereto and dynamically switches host/standby control/data transmission channels; analyze real power consumption of each onboard module, establish a corresponding model for scheduling and control, maintain persistent connection between a terminal and a service side through the control channel, and transmit an energy consumption control demand through the control channel, the service side regularly or dynamically adjusts an operation or sleep state of each power consumption module of the terminal or the whole device according to service transmission demands.

In an embodiment, the aggregation control apparatus for distributed flexible resources may further include a clock module, a storage module and a power supply module. The clock module is configured to provide a clock signal for the intelligent sleep module to wake up a corresponding communication module regularly. The storage module is configured to store operation instructions and data information of the processing control unit. The power supply module is configured to supply power to the processing control unit, the communication unit, the storage module and the clock module.

According to a second aspect, an embodiment of the application provides an aggregation control method for distributed flexible resources, the aggregation control method is based on the aggregation control apparatus for distributed flexible resources according to the first aspect, and includes the following operations. Connected massive distributed flexible resources are clustered to obtain multiple types of distributed flexible resources, and each type of the distributed flexible resources is modeled in a micro-element manner to obtain a model of each type of the distributed flexible resources. A comprehensive objective function including economy, low carbon and low fluctuation, and a real-time power balance constraint condition and a resource response quantity constraint condition are established in combination with the model of each type of the distributed flexible resources. The comprehensive objective function is optimally solving based on the real-time power balance constraint condition and the resource response quantity constraint condition, to obtain a power scheduling result in each response period.

In an embodiment, the process of modeling each type of the distributed flexible resources in the micro-element manner to obtain the model of each type of the distributed flexible resources may include the following operations. Multiple types of distributed flexible resources are divided into source characteristic micro-elements and load characteristic micro-elements. Distributed flexible resources of an energy storage micro-element type are modeled with reference to distributed power supplies or distributed loads. A distributed power supply digital twinning model is constructed for distributed flexible resources of a wind-and-photovoltaic micro-element type, to obtain a distribution curve of wind and photovoltaic combined output. A micro-grid external characteristic model based on virtual electricity quantity, is established for distributed flexible resources of a micro-grid micro-element type. A response quantity prediction and evaluation model of an air-conditioner load in adjustable loads, is established for distributed flexible resources of an adjustable load micro-element type.

In an embodiment, the process of constructing the distributed power supply digital twinning model to obtain the distribution curve of wind and photovoltaic combined output may include the following operations. A wind power output model and a photovoltaic output model are described respectively based on acquired wind power output samples and photovoltaic output samples and by using a kernel density estimation method, and a distribution function of wind power output and a distribution function of photovoltaic output are calculated. A seasonal correction factor is introduced to correct the distribution function of wind power output, and a weather correction factor is introduced to correct the distribution function of photovoltaic output. Correlation of wind and photovoltaic combined output is modeled based on a corrected distribution function of wind power output and a corrected distribution function of photovoltaic output, and a distribution function of wind and photovoltaic combined output is calculated. An inverse function of the distribution function of wind and photovoltaic combined output is taken as a function for the distribution curve of wind and photovoltaic combined output.

In an embodiment, the process of establishing the comprehensive objective function may include the following operations. A minimum value of a sum of cost of purchasing electricity from a large power grid, cost of charging and discharging energy storage, cost of purchasing electricity from the micro-grid and compensation cost actuated by the adjustable loads participating in demand response, is taken as an economy objective function. A minimum value of a difference by subtracting cost of selling electricity to the micro-grid from a sum of carbon emission cost of purchasing electricity from the micro-grid and carbon emission cost of purchasing electricity from the large power grid, is taken as a low-carbon objective function. A low fluctuation objective function is calculated based on an average electricity quantity purchased from the large power grid, an average electricity quantity purchased from the micro-grid and an average electricity quantity sold to the micro-grid in a scheduling period, and an electricity quantity purchased from the large power grid, an electricity quantity purchased from the micro-grid and an electricity quantity sold to the micro-grid at each moment of the scheduling period. A sum of a weighted economy objective function, a weighted low carbon objective function and a weighted low fluctuation objective function is taken as the comprehensive objective function.

In an embodiment, the process of establishing the real-time power balance constraint condition may include the following operations. A difference between a sum of the electricity quantity purchased from the large power grid, power of wind and photovoltaic combined output, discharging power of the energy storage micro-elements and the electricity quantity purchased from the micro-grid at each moment, and a sum of the electricity quantity sold to the micro-grid and charging power of the energy storage micro-elements is solved, and the difference is taken as a first calculated value. A difference between a total predicted load demand quantity and demand response power of the adjustable loads is taken as a second calculated value. The first calculated value is controlled to be equal to the second calculated value, as the real-time power balance constraint condition.

In an embodiment, the process of establishing the resource response quantity constraint condition may include the following operations. A micro-grid external characteristic model based on virtual electricity quantity is taken as a response quantity constraint condition of the micro-grid. Charging/discharging power constraint conditions of the energy storage micro-elements are set by using rated power of the energy storage micro-elements, and charge quantity constraint conditions of the energy storage micro-elements are set by using upper and lower limits of charge states of the energy storage micro-elements. Demand response power of the adjustable loads are controlled to be less than or equal to a total predicted amount of response potentials of the adjustable loads, and the demand response power of the adjustable loads are controlled to be equal to or greater than zero, as response quantity constraint conditions of the adjustable loads.

In an embodiment, the comprehensive objective function may be optimally solved by using an improved particle swarm optimization solving algorithm combining sparrow search and beetle antennae search (BAS), in combination with the real-time power balance constraint condition and the resource response quantity constraint condition.

The technical solutions of the application have advantages as follows.

1. According to the aggregation control apparatus for distributed flexible resources provided by the application, the processing control unit achieves UL connection and DL connection through the communication unit, and is connected to processing control units of other aggregation control apparatuses for distributed flexible resources through the communication unit, to achieve an edge ad-hoc network, so that regional-level coordination and autonomy of the distributed flexible resources are achieved at an edge end, and complex differences caused by massive distributed resources accessing to heterogeneous networks, miscellaneous protocols and different response capabilities may be effectively shielded; and the processing control unit uniformly aggregates and finely processes multiple types of distributed resources through an energy flow regulation method, so that large-scale access capabilities of the distributed flexible resources is effectively improved, edge response capability of aggregation regulation is improved, and balance adjustment capability of a power grid to which high-proportion new energies access is improved.

2. According to the aggregation control method for distributed flexible resources provided by the application, connected massive distributed flexible resources are clustered to obtain multiple types of distributed flexible resources, and each type of the distributed flexible resources is modeled in a micro-element manner to obtain a model of each type of the distributed flexible resources; a comprehensive objective function including economy, low carbon and low fluctuation, and a real-time power balance constraint condition and a resource response quantity constraint condition are established in combination with the model of each type of the distributed flexible resources; the comprehensive objective function is optimally solving based on the real-time power balance constraint condition and the resource response quantity constraint condition, to obtain a power scheduling result in each response period. The application uniformly aggregates and finely processes multiple types of distributed resources through an energy flow regulation method, so that large-scale access capabilities of the distributed flexible resources is effectively improved, edge response capability of aggregated capacity is improved, and balance adjustment capability of a power grid to which high-proportion new energies access is improved.

BRIEF DESCRIPTION OF THE DRAWINGS

In order to explain specific implementations of the application or technical solutions in the related art more clearly, drawings required to be used in descriptions of the specific implementations or the related art will be briefly introduced below. It is apparent that the drawings in the following descriptions are some implementations of the application, and other drawings may also be obtained by those of ordinary skill in the art according to these drawings without paying any creative work.

FIG. 1 is a composition diagram of a specific example of an aggregation control apparatus according to an embodiment of the application.

FIG. 2 is a composition diagram of another specific example of an aggregation control apparatus according to an embodiment of the application.

FIG. 3 is a schematic diagram of a deployment mode and UL and DL interfaces of an aggregation control apparatus according to an embodiment of the application.

FIG. 4 is a processing logic diagram of a delay measurement and control module according to an embodiment of the application.

FIG. 5 is a processing logic diagram of an intelligent sleep module according to an embodiment of the application.

FIG. 6 is a processing logic diagram of a self-learning intelligent decision-making networking module according to an embodiment of the application.

FIG. 7 is a processing logic diagram of a hardware dual-channel host/standby separation control communication module according to an embodiment of the application.

FIG. 8 is a processing logic diagram of an energy flow regulation module according to an embodiment of the application.

FIG. 9 is a flowchart of a specific example of an aggregation control method according to an embodiment of the application.

FIG. 10 is a flowchart of a specific example of a method for modeling a digital twin of a distributed power supply according to an embodiment of the application.

FIG. 11 is a flowchart of another specific example of a method for modeling a digital twin of a distributed power supply according to an embodiment of the application.

FIG. 12 is a flowchart of a specific example of establishing a comprehensive objective function according to an embodiment of the application.

DETAILED DESCRIPTION

The technical solutions of the application will be clearly and completely described below with reference to the drawings. It is apparent that the described embodiments are part of the embodiments of the application, rather than all of the embodiments. All other embodiments obtained by those of ordinary skill in the art based on the embodiments of the application without paying any creative work shall fall within the scope of protection of the application.

In descriptions of the application, it should be noted that orientations or positional relationships indicated by terms "center", "upper", "lower", "left", "right", "vertical", "horizontal", "inner", "outer" or the like are based on the orientations or positional relationships shown in the drawings, which is only intended to facilitate describing the application and simplifying the descriptions, rather than indicating or implying that the indicated apparatus or element must have a specific orientation or must be constructed and operate in a specific orientation, and thus should not be understood as limitation of the application. Furthermore, terms "first", "second" and "third" are only for the descriptive purpose and should not be understood as indicating or implying relative importance.

In the descriptions of the application, it should be noted that unless otherwise specified and defined clearly, terms "mount", "connect" and "connection" should be understood in a broad sense, for example, may be a fixed connection, or a detachable connection, or an integral connection; may be a mechanical connection, or an electrical connection; may be a direct connection, or an indirect connection through an intermediate medium, or internal communication of two components; may be a wireless connection or a wired connection. Specific meanings of the above terms in the application may be understood by those of ordinary skill in the art according to specific situations.

Furthermore, technical features involved in different implementations of the application described below may be combined with each other, as long as they do not conflict with each other.

First embodiment

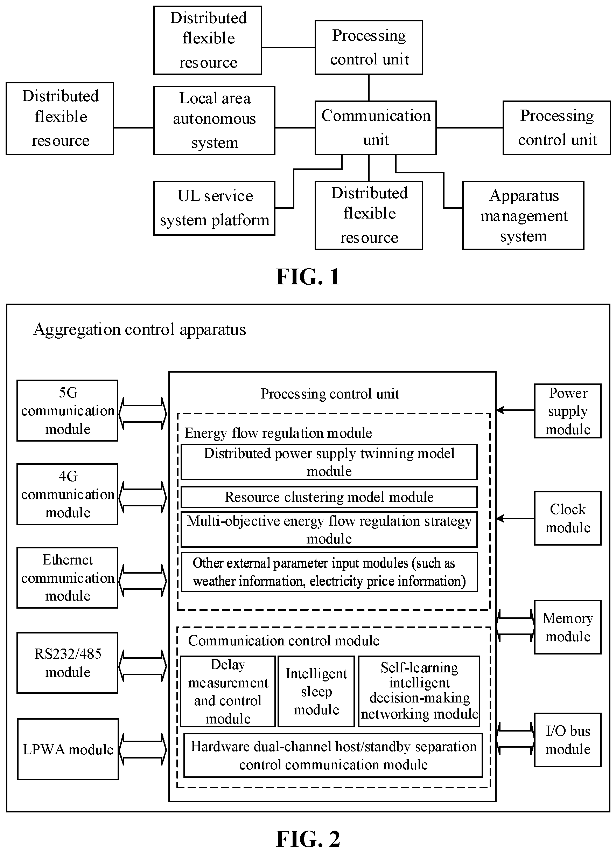

An embodiment of the application provides an aggregation control apparatus for distributed flexible resources. As shown in FIG. 1, the aggregation control apparatus may include a communication unit and a processing control unit. The processing control unit achieves uplink (UL) connection and downlink (DL) connection through the communication unit, and is connected to processing control units of other aggregation control apparatuses for distributed flexible resources through the communication unit, to achieve an edge ad-hoc network.

Exemplarily, as shown in FIG. 2, the communication unit may include multiple types of communication modules, such as a 5th generation (5G) communication module, a 4th generation (4G) communication module, an Ethernet communication module, a RS232/485 module, a Low-Power Wide-Area Network (Lpwa) module, and an input/output (I/O) bus module. The distributed flexible resources are directly connectable to corresponding types of communication modules, or connectable to the corresponding types of communication modules through an execution terminal, or connectable to the corresponding types of communication modules through a local local-area autonomous system; all the communication modules are connected to the processing control unit.

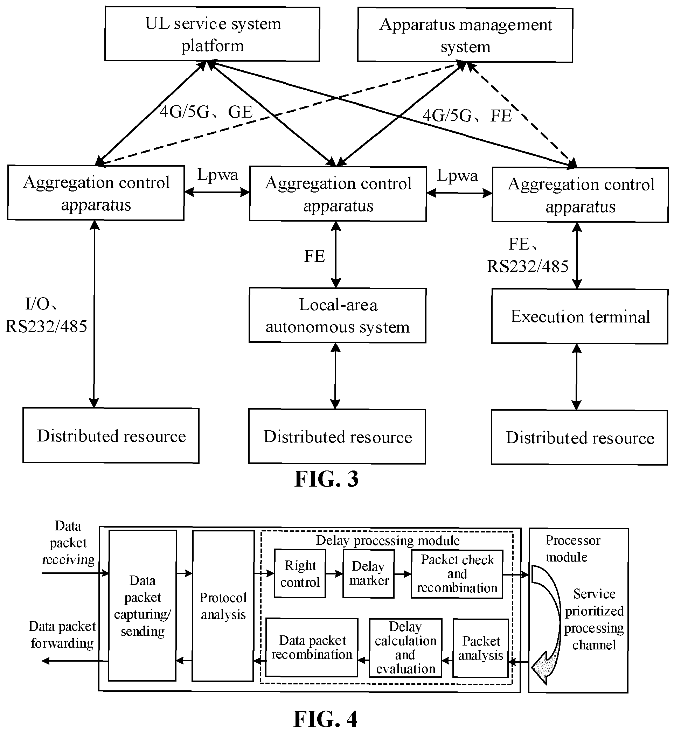

Further, the aggregation control apparatus provided in the embodiment of the application supports rich forms of interfaces, and supports a 4G/5G interface, a Gigabit Ethernet (GE) interface, a Fast Ethernet (FE) interface, a RS232/485 interface, an I/O interface and a Lpwa interface. As shown in FIG. 3, when the distributed flexible resources access to the apparatus, the apparatus interacts with the resources and is directly connectable to the resources by way of I/O or RS232/485; when the distributed flexible resources access to the apparatus through the execution terminal, the apparatus interacts with the execution terminal and is directly connectable to the execution terminal by way of FE or RS232/485; when the distributed flexible resources are controlled by the local local-area autonomous system and access to the apparatus through the autonomous system, the aggregation control apparatus interacts with the autonomous system and is directly connectable to the autonomous system by way of FE; aggregation control apparatuses are persistently connectable there-between by way of Lpwa, to achieve the edge ad-hoc network; the aggregation control apparatus docks with an upper-layer system platform in UL by way of 4G/5G or GE, and docks with an apparatus management system by way of 4G/5G or FE.

Exemplarily, the processing control unit is configured to support scheduling and control services to achieve real-time demand response, low-power consumption massive-scale deployment, and intelligent grid-connection/disconnection of micro-grid. The processing control unit is further configured to: establish a model of each type of the distributed flexible resources, and establish a comprehensive objective function including economy, low carbon and low fluctuation, and a real-time power balance constraint condition and a resource response quantity constraint condition in combination with the model of each type of the distributed flexible resources; optimally solve the comprehensive objective function based on the real-time power balance constraint condition and the resource response quantity constraint condition, to obtain a power scheduling result in each response period; and schedule the distributed flexible resources based on the scheduling result.

Further, as shown in FIG. 2, the processing control unit may include an energy flow regulation module and a communication control module.

Exemplarily, the communication control module is directly or indirectly connectable to the distributed flexible resources, and is connectable to the energy flow regulation module, and the communication control module is configured to: support the real-time demand response of the scheduling and control services, the low-power consumption massive-scale deployment, and the intelligent grid-connection/disconnection of the micro-grid; and schedule the distributed flexible resources according to the scheduling result.

Further, as shown in FIG. 2, the communication control module may include a delay measurement and control module, an intelligent sleep module, a self-learning intelligent decision-making networking module, and a hardware dual-channel host/standby separation control communication module. The real-time demand response of the scheduling and control services, the low-power consumption massive-scale deployment, and the intelligent grid-connection/disconnection of the micro-grid are supported through a delay accurate control algorithm, a second-level intelligent sleep algorithm, an intelligent decision-making algorithm, and hardware dual-channel switching.

Exemplarily, the delay measurement and control module is configured to: capture data packets of a data link layer in real time, perform layer-by-layer header parsing operations on the data packets, and send the data packets to an application layer for processing, to obtain processed data packets; and perform protocol analysis, Internet Protocol (IP) address analysis and port analysis on the processed data packets at a network layer and the application layer; set a highest control authority for a specific control packet, prioritize processing and forwarding the specific control packet, construct a delay accurate control and measurement algorithm, measure delay information, print the delay information to the data packets, recalculate check values of headers of analyzed data packets, and output the check values to a target device.

Exemplarily, the delay measurement and control module of the embodiment of the application may include a network data packet capturing module, a protocol analysis module, and a delay control module. The network data packet capturing module is configured to: capture data packets of the data link layer in real time, perform layer-by-layer header parsing operations on the data packets, and send the data packets to the application layer for processing, to obtain processed data packets. The protocol analysis module is configured to perform protocol analysis, IP address analysis and port analysis on the processed data packets at the network layer and the application layer. The delay control module is configured to set the highest control authority for the specific control packet, prioritize processing and forwarding the specific control packet, construct the delay accurate control and measurement algorithm, measure delay information, print the delay information to the data packets, recalculate check values of headers of analyzed data packets, and output the check values to the target device. Specifically, the delay accurate control and measurement algorithm adds a marker bit to a data frame to record a time when the data packet enters the device; after it is processed by an internal service application, it starts to be forwarded out of a link of the device; delay of the packet inside the device is measured by using the time information of the marker bit, while according to attribute of a service, it is determined whether the delay may meet high delay sensitivity requirements of the service; the service is forwarded normally when the delay meets the high delay sensitivity requirements, otherwise, the delay is fed back to a sending side when the delay does not meet the high delay sensitivity requirements. The apparatus may monitor the network in real time, authorize a special level to a specific packet, process the specific packet and forward it to the target device in the fastest way and with the shortest delay, and allow the network delay to be deterministic through in-band delay measurement, to ensure availability of service control, as shown in FIG. 4.

Exemplarily, the intelligent sleep module is configured to establish a power consumption model of the communication unit in real time, and schedule the communication module in real time based on the power consumption model of the communication unit, according to a service interaction frequency and through an intelligent sleep algorithm, to achieve optimization of energy consumption.

Exemplarily, the intelligent sleep module of the embodiment of the application may include a component power consumption model analysis module and a low power consumption control module. The power consumption model analysis module is configured to establish a power consumption model of a 5G communication module and a power consumption model of an Ethernet communication module, and contents of the model include corresponding energy consumption information. The low power consumption control module schedules the communication module in real time according to the service interaction frequency and through the intelligent sleep algorithm, to achieve optimization of energy consumption.

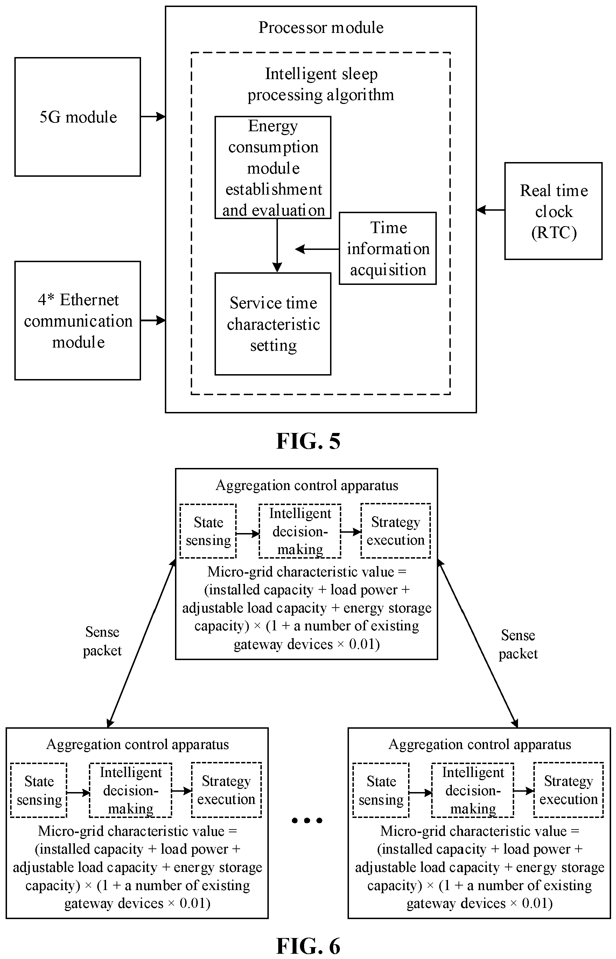

Taking the structure shown in FIG. 2 as an example, processing logic of the intelligent sleep module is shown in FIG. 5. The power consumption model analysis module of the embodiment of the application evaluates components which may be optimized in terms of electric energy at a hardware model selection stage, and components of the apparatus which may be optimized in terms of energy consumption include the 5G communication module (power consumption in a sleep state is 0.03W, power consumption in a full-rate operation is 2.4W) and the Ethernet communication module (power consumption in a hang-up state is 0.07W, power consumption at a full wire speed is 0.7W). The intelligent sleep module considers the service interaction frequency comprehensively, sleeps a corresponding service communication port when the service is idle, and wakes the port up regularly in combination with an onboard high-accuracy real-time clock function when the service is applied. An energy-saving calculation formula is: energy consumption (P) = (SG sleep power consumption * relative service idle time (T5) + 5G full load power consumption * relative service application time (T5w)) + (Ethernet hang-up power consumption * relative service idle time (Te) + Ethernet full load power consumption * relative service application time (Tew))*4=(0.03*T5+2.4*T5w)+(0.07*Te+0.7*Tew)*4. Time parameters may be brought in according to a specific service application.

Exemplarily, the self-learning intelligent decision-making networking module is configured to: regularly sense, monitor and issue apparatus state packets, elect a master gateway device when there is a grid-connection/disconnection demand, and perform identity registration to all processing control units in the network after successfully electing the master gateway device; achieve self-election of the master gateway device by taking network characteristic values as a determination basis and through an intelligent decision-making algorithm, and dynamically control input or output of distributed flexible resources in an area; and perform grid-connection/disconnection management of devices, the master gateway device recalculates and modifies micro-grid characteristic values according to an output result of the intelligent decision-making module, and other slave devices execute a slave device strategy.

Exemplarily, the self-learning intelligent decision-making networking module may include a state sensing module, an intelligent decision-making module and a strategy execution module, which are configured to achieve regional autonomy of the communication network and flexible networking, thereby achieving micro-grid autonomy, dynamic expansion and intelligent grid-connection. The state sensing module regularly issues state packets of the apparatus to outside at minute-level intervals, the packet has a length of 64 bytes, consumes a small bandwidth, has a format of a standard IP packet, and has contents indicating the current state of the device. When it is the first time to join an existing network or create a new network, the contents are displayed as "an independent device" + "micro-grid characteristic values", while state sensing packets issued by other devices in the network are monitored in real time. When state packets from other devices are not monitored, the current device is a master device. When state sensing packets from other devices are monitored, it means that there are two independent networks having grid-connection demands, then master gateway devices in the two networks (when there is only one gateway, the gateway is the master device by default) enable intelligent decision-making modules simultaneously, to re-elect the master gateway device; after successfully electing the master device, the master device performs identity registration to all devices in the network. The intelligent decision-making module achieves intelligent decision-making by taking "network characteristic values" as a determination basis and through a self-election algorithm, to automatically elect the master device, and is configured to control input or output of power supply, energy storage, and loads in the area. The micro-grid characteristic values may include installed capacity of the power supply, load power, adjustable load capacity, energy storage capacity, a number of existing gateway devices (1 by default), etc. An algorithm formula of the micro-grid characteristic value may be represented as: micro-grid characteristic value = (installed capacity + load power + adjustable load capacity + energy storage capacity) $\times$ (1 + a number of existing gateway devices $\times$ 0.01).

Through comparison of the micro-grid characteristic values, a device with a larger value is elected as the master device. The strategy execution module recalculates and modifies the micro-grid characteristic values on the master device according to the output result of the intelligent decision-making algorithm, and other slave devices execute the slave device strategy. Since then, a self-election networking process is completed. When the device requires grid-disconnection, that is, when the master device detects that a number of slave devices in the network decreases or there is no master device in the network, it will restart a self-election networking function to elect a new master device, as shown in FIG. 6.

Further, the hardware dual-channel host/standby separation control communication module is configured to: exchange high-speed big data and low-speed control instructions with a master station and other processing control units; monitor rate and abnormal conditions of a main data channel and corresponding requests of a control channel, and issue communication resource scheduling and control instructions to perform communication resource scheduling, the gateway side responds thereto and dynamically switches host/standby control/data transmission channels; analyze real power consumption of each onboard module, establish a corresponding model configured for scheduling and control, maintain persistent connection between a terminal and a service side through the control channel, and transmit an energy consumption control demand through the control channel, the service side regularly or dynamically adjusts an operation or sleep state of each power consumption module of the terminal or the whole device according to service transmission demands.

Exemplarily, the hardware dual-channel host/standby separation control communication module uses a 4G/5G public network as a high-speed main data channel and uses a low-speed Lora as the control channel and a data standby channel; the control channel is connected to a cloud control system to achieve dual-channel physical isolation, and ensure safe operation of the system. In a normal situation, data is transmitted through the main data channel, the control system sends a communication resource scheduling instruction when the control system monitors abnormality occurred to the main data channel, to inform the gateway to switch the data channel to the low-speed standby channel; when there is an energy-saving demand, the control system sends a sleep instruction to sleep a corresponding channel or the gateway itself, and return to a normal state when the demand is completed.

The hardware dual-channel host/standby separation control communication module may include a resource scheduling module and an energy-saving control module.

Exemplarily, the resource scheduling module may include a host/standby data control channel module, a service-side communication resource control module, and a gateway-side control and response module.

The host/standby data control channel module may include a 4G/5G communication module and a Lpwa communication module. The 4G/5G communication module is a main transmission channel for data communication of the device, configured to exchange big data between the master station and the device at a high speed, and have characteristics of small delay, high bandwidth, fast speed, etc. The Lpwa communication module is a device control channel, maintains a persistent connection state, is configured to transmit device control packets and heartbeat packets, and have characteristics of low power consumption, low speed, etc.

The service-side communication resource control module is responsible for monitoring rate and abnormal conditions of the main data channel and corresponding requests of the control channel; scheduling communication resources and issuing communication resource scheduling and control instructions when the rate of the main data channel drops to a certain threshold, or communication is interrupted, or there is a specific communication resource switching demand at a corresponding interruption, the gateway side controls corresponding modules to quickly respond thereto.

The gateway-side control and response module is responsible for receiving the communication resource scheduling and control instructions issued by the service side of the main station, parsing the instructions, and dynamically switching data reporting channels according to contents of the instructions, to achieve dynamic switching of the host/standby control/data transmission channels.

Exemplarily, the energy-saving control module may include a device energy consumption model establishment module and an energy consumption demand scheduling and control module.

The device energy consumption model establishment module analyzes real power consumption of each onboard module which may include power consumption of the 4G/5G communication module, the Ethernet communication module, a serial communication module, a processor module and the whole machine (excluding a low-speed Lpwa module), establishes corresponding models, and set numbers for the models, for scheduling and control.

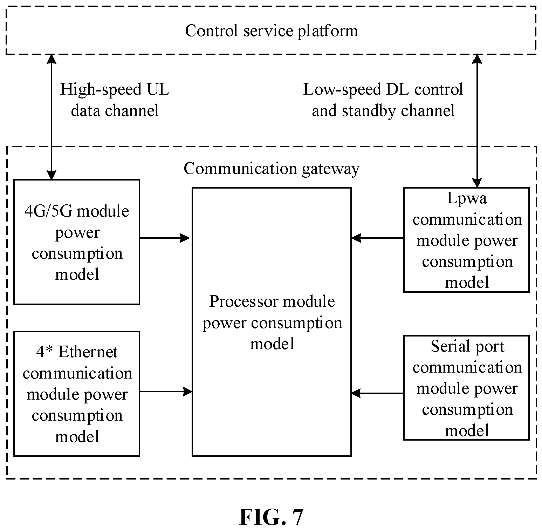

The energy consumption demand scheduling and control module maintains persistent connection between the terminal and the service side through the control channel, and transmits the energy consumption control demand through the control channel, and the service side regularly or dynamically adjusts the operation or sleep state of each power consumption module of the terminal or the whole device (excluding the low-speed Lpwa module) according to service transmission demands, to dynamically achieve different degrees of power-saving mode settings in real-time, as shown in FIG. 7.

Exemplarily, the energy flow regulation module is directly or indirectly connectable to the distributed flexible resources, and is connectable to an UL service system platform and an apparatus management system, and the energy flow regulation module is configured to: establish the model of each type of the distributed flexible resources, and establish the comprehensive objective function including economy, low carbon and low fluctuation, and the real-time power balance constraint condition and the resource response quantity constraint condition in combination with the model of each type of the distributed flexible resources; and optimally solve the comprehensive objective function based on the real-time power balance constraint condition and the resource response quantity constraint condition, to obtain the power scheduling result in each response period.

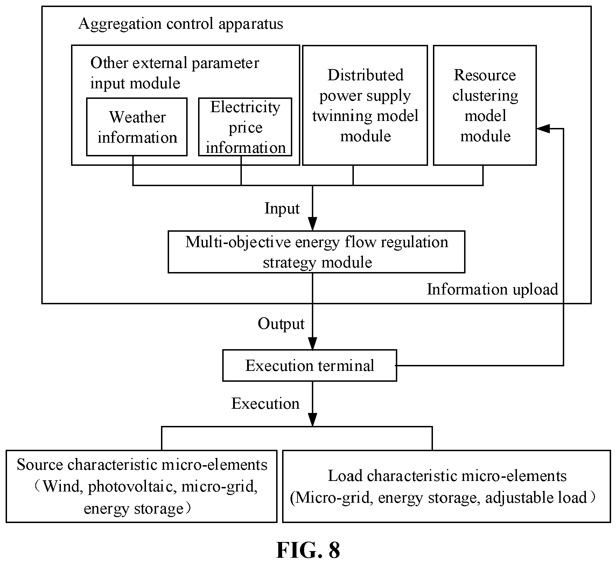

Further, as shown in FIG. 2, the energy flow regulation module may include a distributed power supply twinning model module, a resource clustering model module, a multi-objective energy flow regulation strategy module, and an external parameter input module. Processing logic of the energy flow regulation module is shown in FIG. 8.

The distributed power supply twinning model module is configured to construct a distributed power supply digital twinning model for distributed flexible resources of connected wind and photovoltaic micro-elements based on weather information and seasonal information input by external parameters, to obtain a distribution curve of wind and photovoltaic combined output.

Exemplarily, the distributed power supply twinning model module of the embodiment of the application may perform operations as follows: describing a wind power output model and a photovoltaic output model respectively based on acquired wind power output samples and photovoltaic output samples and by using a kernel density estimation method, and calculating a distribution function of wind power output and a distribution function of photovoltaic output; introducing a seasonal correction factor to correct the distribution function of wind power output, and introducing a weather correction factor to correct the distribution function of photovoltaic output; modeling correlation of wind and photovoltaic combined output based on a corrected distribution function of wind power output and a corrected distribution function of photovoltaic output, and calculating a distribution function of wind and photovoltaic combined output; taking an inverse function of the distribution function of wind and photovoltaic combined output as a function for the distribution curve of wind and photovoltaic combined output.

The resource clustering model module is configured to cluster connected massive distributed flexible resources to obtain multiple types of distributed flexible resources. Exemplarily, when the apparatus aggregates massive resources, a large data volume is required, and there are a lot of redundancies and repeated calculations. The same model may be approximately used for the same type of resources by clustering resources, which may greatly simplify calculation amount. A method for selecting a clustering center by combining Chebyshev distance and Euclidean distance is used in the embodiment of the application, which may ensure far distances from a new clustering center obtained each time to existing clustering centers, so that initial value of the clustering center is stable, and the clustering result is more reasonable.

The multi-objective energy flow regulation strategy module is configured to: establish the comprehensive objective function including economy, low carbon and low fluctuation, and the real-time power balance constraint condition and the resource response quantity constraint condition by combining the model of each type of the distributed flexible resources and electricity price information input by the external parameter input module; and optimally solve the comprehensive objective function based on the real-time power balance constraint condition and the resource response quantity constraint condition, to obtain the power scheduling result in each response period. The multi-objective energy flow regulation strategy module will implement operations as follows: establishing the comprehensive objective function including economy, low carbon and low fluctuation, and the real-time power balance constraint condition and the resource response quantity constraint condition in combination with the model of each type of the distributed flexible resources; optimally solving the comprehensive objective function based on the real-time power balance constraint condition and the resource response quantity constraint condition, to obtain the power scheduling result in each response period.

It should be noted that the processing control unit of the embodiment of the application will implement an aggregation control method for distributed flexible resources provided in a second embodiment, please refer to the section of the second embodiment for the details, which is not elaborated here.

In an embodiment, as shown in FIG. 2, the aggregation control apparatus for distributed flexible resources may further include a clock module, a storage module and a power supply module. The clock module is configured to provide a clock signal for the intelligent sleep module to wake up a corresponding communication module regularly. The storage module is configured to store operation instructions and data information of the processing control unit. The power supply module is configured to supply power to the processing control unit, the communication unit, the storage module and the clock module.

Second embodiment

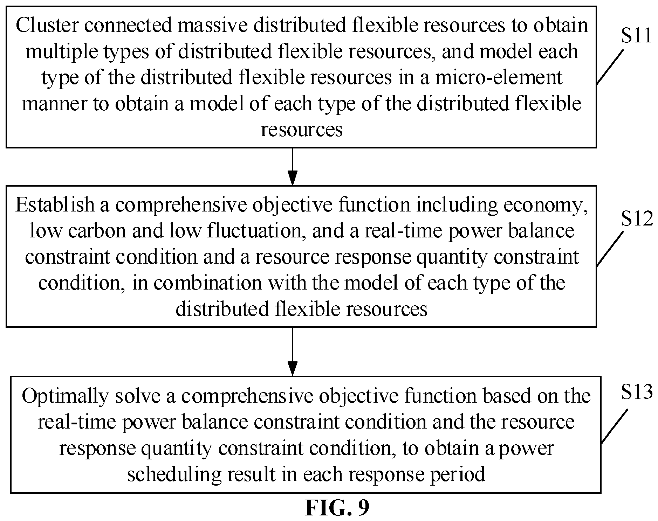

An embodiment of the application provides an aggregation control method for distributed flexible resources, the aggregation control method is based on the aggregation control apparatus for distributed flexible resources of the first embodiment, and as shown in FIG. 9, the control method may include the following operations S11 to S13.

At S11, connected massive distributed flexible resources are clustered to obtain multiple types of distributed flexible resources, and each type of the distributed flexible resources is modeled in a micro-element manner to obtain a model of each type of the distributed flexible resources.

Exemplarily, the operation of clustering connected massive distributed flexible resources to obtain multiple types of distributed flexible resources in the embodiment of the application is implemented by the resource clustering model module of the first embodiment. The resource clustering model module is based on the method for selecting a clustering center by combining Chebyshev distance and Euclidean distance, a basic principle thereof is to select data objects far away from each other as much as possible, as initial values for clustering, so as to prevent too many selected initial values from appearing in the same cluster.

Modeling operations of the resource clustering model are as follows.

1) A power dataset matrix of controlled resources is set as D, and a number of clustering is set as k, and a row of power data $x_i$ in the dataset is randomly selected as a first clustering center, which is recorded as $G_1$.

2) A comprehensive distance of combination of the Chebyshev distance and the Euclidean distance is defined as a distance between two data in the power dataset matrix defined as D,

$$d_{ij} = a \max_{k=1,2,\cdots,p} |x_{ik} - x_{jk}| + \mathbf{b} \sum_{k=1}^{p} (x_{ik} - x_{jk})^2 \tag{1}$$

Here, the first term is the Chebyshev distance, and the second term is the Euclidean distance. Due to different dimensions thereof, weight coefficients *a* and *b* are introduced. Since the Euclidean distance covers a lot of distance information, the Euclidean distance is mainly calculated, the Chebyshev distance is used as a correction, and in the application, *a* takes a value of 80%, and *b* takes a value of 20%.

Data $x_j$ farthest from $x_i$ is searched from the power dataset matrix of resources D, which is recorded as $G_2$.

3) Comprehensive distances between any row of data in a remaining data set $D_l$ and $G_1$, $G_2$ are calculated, which are recorded as $d_{j1}$, $d_{j2}$ respectively; let $d_i$ = min {$d_{j1}$, $d_{j2}$}, i =1,2,...,l. A data point corresponding to max{$d_1$, $d_2$,..., $d_1$} is selected as a third clustering center, which is recorded as $G_3$.

4) Operation 3) is repeated to continue to select clustering centers, until a k-th clustering center is selected, which is recorded as $G_k$.

5) After clustering centers are selected, distances between all sample data and each clustering center are calculated according to a set comprehensive distance function. When a point is closest to an n-th clustering center, the point belongs to an n-th clustering cluster, an average value of all vectors in the same clustering cluster is calculated as a new clustering center.

The method for selecting a clustering center based on combination of the Chebyshev distance and the Euclidean distance may ensure far distances from a new clustering center obtained each time to existing clustering centers, so that initial value of the clustering center is stable, and it is not easy to fall into a local optimal solution.

Exemplarily, the process of modeling each type of the distributed flexible resources in the micro-element manner to obtain the model of each type of the distributed flexible resources in the embodiment of the application may include the following operations. 1) Multiple types of distributed flexible resources are divided into source characteristic micro-elements and load characteristic micro-elements. 2) Distributed flexible resources of an energy storage micro-element type are modeled with reference to distributed power supplies or distributed loads. 3) A distributed power supply digital twinning model is constructed for distributed flexible resources of wind and photovoltaic micro-element type, to obtain a distribution curve of a wind-and-photovoltaic combined output. 4) A micro-grid external characteristic model based on virtual electricity quantity, is established for distributed flexible resources of a micro-grid micro-element type. 5) A response quantity prediction and evaluation model of an air-conditioner load in adjustable loads, is established for distributed flexible resources of an adjustable load micro-element type.

Exemplarily, in the embodiment of the application, definition of classification of the distributed flexible resources themselves is reconstructed, to divide the distributed flexible resources into source characteristic micro-elements and load characteristic micro-elements (as shown in FIG. 8), and re-divide resources (such as energy storage, micro-grid) which may be used as both power supplies and loads in certain conditions. As a monomer resource, the energy storage may be modeled with reference to distributed power supplies or distributed loads under division of micro-elements. The micro-grid itself contains multiple flexible resources. In the application, external characteristics of the micro-grid containing multiple flexible resources are modeled in the micro-element manner, in a multi-objective energy flow regulation strategy.

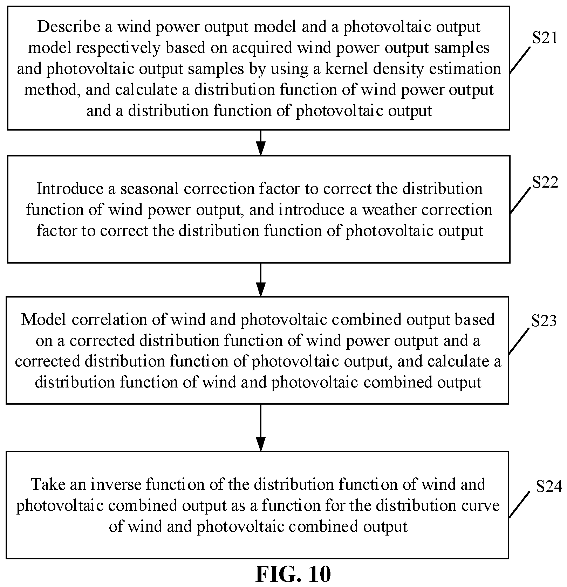

Exemplarily, the above operation of "constructing the distributed power supply digital twinning model to obtain the distribution curve of wind and photovoltaic combined output" is implemented by the distributed power supply twinning model module of the first embodiment. As shown in FIG. 10, implementation processes are performed by operations S21 to S24, specifically as follows.

As intermittent distributed power supplies, wind power and photovoltaic power are easily affected by natural conditions, their output power have strong fluctuation and anti-peak shaving characteristics, however, they are complementarity in power and adjustment capabilities. Making full use of complementarity between wind power and photovoltaic output to achieve joint scheduling, may effectively alleviate uncertain impact due to a single wind turbine and photovoltaic grid-connection. The embodiment of the application proposes a generation method for a wind and photovoltaic combined output scenario based on non-parametric kernel density estimation, Copula function, seasonal and weather correction factors, constructs the distributed power supply digital twinning model, and may obtain the distribution curve of wind and photovoltaic combined output close to real situations, thereby providing basic data for peak clipping, valley filling, peak shaving and frequency adjustment of virtual power plants.

At S21, a wind power output model and a photovoltaic output model are described respectively based on acquired wind power output samples and photovoltaic output samples and by using a kernel density estimation method, and a distribution function of wind power output and a distribution function of photovoltaic output are calculated.

Exemplarily, in descriptions of characteristics of wind power and photovoltaic output, a parameter estimation method and a non-parametric estimation method are usually used for calculation. The parameter estimation method needs to assume that a sample set conforms to a certain probability distribution in advance, however, it ignores intermittency and uncertainty of a wind speed curve and light intensity, resulting in a large deviation between a fitting result of a probability distribution model and a real distribution curve. The non-parametric estimation method does not need to know a sample distribution model in advance, and constructs a sample probability distribution by combining historical samples and their characteristics, which may obtain a mathematical model closer to real situations.

The non-parametric kernel density estimation method is selected to model wind power and photovoltaic power output, and N observed sample values $x_1$, $x_2$,..., $x_n$ of a random variable $x$ are known, then a probability density function p($x$) of the sample set has a formula:

$$p(x) = \frac{1}{Nh} \sum_{k=1}^{N} k(\frac{x - x_k}{h})$$
(2)

Here, h is a bandwidth; N is a number of samples; K(•) is a kernel function for kernel density estimation, and selects a Gaussian kernel function which is a classical robust radial basis kernel function. K(•) is a unimodal distribution density function symmetrical to an origin:

$$k(u) = \frac{1}{\sqrt{2\Pi}} \exp(-\frac{u^2}{2})$$
(3)

K(u) satisfies conditions:

$$k(u) \geq 0, \int k(u)$$
$$\int u k(u) = 0$$
$$\int u^2 k(u) du > 0 \tag{4}$$

1) Distribution function of wind power output

Output of a wind turbine is restricted by an actual wind speed. During power generation, distribution of the wind speed should be predicted according to actual conditions, and a wind power model is established to estimate generated power. Based on output data of wind power in historical N days (a sampling period is 1h), an estimated value of a probability density function of output of the wind turbine for each period within 24h (a sampling period may be 1h) may be established by using the kernel density estimation method, as shown in a formula as follows:

$$f_{h,t}(x_t) = \frac{1}{Nh} \sum_{i=1}^{N} K\left(\frac{x_t - X_{d,t}}{h}\right) \tag{5}$$

Here, h is a bandwidth; $X_{d,t}$ is output of the wind turbine in a t period at a d-th day; the kernel function K(•) is a Gaussian kernel function, then the distribution function of wind power output is:

$$F(x_t) = \int \frac{1}{Nh} \sum_{i=1}^{N} K\left(\frac{x_t - X_{d,t}}{h}\right) dx \tag{6}$$

2) Distribution function of photovoltaic power output

Output power and efficiency of photovoltaic power are related to weather factors and light intensity. During power generation, distribution of light intensity should be predicted according to condition data such as time, weather, etc. Based on output data of photovoltaic power in historical N days (a sampling period is 1h), an estimated value of a probability density function of photovoltaic output for each period within 24h (a sampling period is 1h) may be established by using the kernel density estimation method, as shown in a formula as follows:

$$f_{h,t}(y_t) = \frac{1}{nh} \sum_{d=1}^{n} K\left(\frac{y_t - Y_{d,t}}{h}\right) \tag{7}$$

Here, h is a bandwidth; $Y_{d,t}$ is output of the wind turbine in a t period at a d-th day; the kernel function K(•) is a Gaussian kernel function, then the distribution function of photovoltaic power output is:

$$F(y_t) = \int \frac{1}{nh} \sum_{d=1}^{n} K\left(\frac{y_t - Y_{d,t}}{h}\right) dx \tag{8}$$

At S22, a seasonal correction factor is introduced to correct the distribution function of wind power output, and a weather correction factor is introduced to correct the distribution function of photovoltaic output.

At S23, correlation of wind and photovoltaic combined output is modeled based on a corrected distribution function of wind power output and a corrected distribution function of photovoltaic output, and a distribution function of wind and photovoltaic combined output is calculated.

Exemplarily, output of the wind turbine is mainly affected by an actual wind speed, and magnitude of the wind speed is mainly related to the season, and the magnitude of the wind speed varies greatly in different seasons. The photovoltaic output is mainly affected by light intensity, and weather types have close relationship with the light intensity.

Sample data of historical wind power and photovoltaic output were classified by a K-means method according to seasons and weather conditions. The wind power output is classified according to seasons: spring (from March to May), summer (from June to August), autumn (from September to November), winter (from December to February); photovoltaic output is classified according to four typical weathers: sunny, cloudy, precipitation (including overcast, rainfall, snowfall), special weather (such as sandstorm, etc.).

A Kendall rank correlation coefficient R is used to represent a degree of fitting between a predicted value and an actual value of each of wind power and photovoltaic output. When R is larger (R is greater than or equal to -1 and less than or equal to 1), the predicted value is closer to actual measured data.

The Kendall rank correlation coefficient R between predicted values of wind power output at four seasons obtained according to the kernel function estimation method and actual measurement data is shown in a table as follows:

Table 1

| meteorological | spring | summer | autumn | winter |
|---|---|---|---|---|
| R | $R_1$ | $R_2$ | $R_3$ | $R_4$ |

A large number of experimental data show that in geographical regions with more wind power (such as Inner Mongolia, Zhangjiakou, etc.), prediction accuracy is higher in summer and autumn, and the prediction accuracy is greatly reduced in winter and spring due to large wind uncertainty. A predicted wind power output distribution model is corrected by introducing a seasonal correction factor $R_i$:

$$F^{'}(x_t) = \frac{F(x_{t,i})}{R_i} \qquad (9)$$

Here, t=1, 2, 3,..., 24, i=1, 2, 3, 4, $R_i$ is the seasonal correction factor, and output of wind turbines are positively correlated thereto, $R_i$ is greater than or equal to 0 and less than or equal to 1, F(x) is a wind power output distribution, F'(x) is a corrected wind power output distribution, and the degree of fitting between the predicted value and the actual value of wind power output is improved by introducing the seasonal correction factor.

The Kendall rank correlation coefficient R between predicted values of photovoltaic output at four typical types of weather obtained according to the kernel function estimation method and actual measurement data is shown in a table as follows:

Table 2

| weather | sunny | cloudy | precipitation | special weather |
|---|---|---|---|---|
| R | $R_1$ | $R_2$ | $R_3$ | $R_4$ |

A large number of experimental data show that prediction accuracy is higher when it is sunny, and prediction errors are higher when it is cloudy, precipitation and special weather. A photovoltaic output distribution model is corrected by introducing a weather correction factor $R_j$:

$$F^{'}(y_t) = \frac{F(y_{t,j})}{R_j} \qquad (10)$$

Here, t=1, 2, 3,..., 24, i=1, 2, 3, 4, $R_j$ is the weather correction factor, and output of photovoltaic arrays are positively correlated thereto, $Rj$ is greater than or equal to 0 and less than or equal to 1, F($y$) is a photovoltaic output distribution, F'($y$) is a corrected photovoltaic output distribution, and the degree of fitting between the predicted value and the actual value of photovoltaic output is improved by introducing the weather correction factor.

4) Distribution curve of wind and photovoltaic combined output

Distributed wind power and photovoltaic output have uncertainty and correlation. Copula function may accurately describe the correlation of wind and photovoltaic combined output. The Copula function is used to model the correlation of wind and photovoltaic combined output. The Coplua function is expressed as a formula:

$$F(x_1, x_2,..., x_N) = C[F_1(x_1), F_2(x_2),..., F_N(x_N)] \quad (11)$$

Here, N is a number of variables; $F_1(x_1), F_2(x_2),..., F_N(x_N)$ represent a probability distribution function of a single random variable $x_1, x_2,..., x_N$; $F(x_1, x_2,..., x_N)$ represents a joint probability distribution function of random variables ($x_1, x_2,..., x_N$); C($\bullet$) represents a Coplua connection function.

Different Copula functions may be obtained according to different generator functions. There are two families of common Copula functions, i.e., Archimedes Copula and Ellipse Copula respectively. Elliptic Copula functions mainly include normal Copula and t-Copula, and Archimedes Copula functions mainly include Gumbel Copula, Clayton Copula and Frank Copula, as shown in Table 3.

Table 3

| Family classification | Function type | Function characteristics |
|---|---|---|
| | Gumbel Copula | Asymmetric tails, high upper tail and low lower tail, sensitive to the upper tail, suitable for modeling a coupled structure with apparent thick tail characteristics at the upper tail and without apparent thick tail characteristics at the lower tail |
| | Clayton Copula | Asymmetric tails, low upper tail and high lower tail, sensitive to the lower tail, suitable for modeling a coupled structure with apparent thick tail characteristics at the lower tail and without apparent thick tail characteristics at the upper tail |
| | Frank Copula | Tails are symmetrical and gradually independent, with uniform distribution of upper tail, central tail and lower tail, belonging to a thick tail distribution, suitable for describing a coupling relationship with symmetric thick tail structural variables |
| Elliptic Copula functions | normal Copula | Tails are symmetrical and gradually independent, belonging to a thin tail distribution |
| | t-Copula | Tails are symmetrical and have correlation, belonging to a thin tail distribution |

Different types of Copula functions have different description accuracy in describing correlations of different tails. Since there are both positive and negative correlations between wind power and photovoltaic power, and there is a high occurrence frequency of extreme cases, the Frank Copula function is a thick-tail distribution function which may describe positive and negative correlations between variables, the Frank Copula function is selected here to describe the correlation between wind and photovoltaic output.

A distribution function of a binary Frank Copula function is:

$$C(u, v; \alpha) = -\frac{1}{\alpha} \ln(1 + \frac{(e^{-u} - 1)(e^{-v} - 1)}{(e^{-\alpha} - 1)}) \quad (12)$$

Here, $\alpha$, u, v are related parameters. When $\alpha$ is greater than 0 and less than or equal to 1, u is positively correlated to v; when $\alpha$ is greater than -1 and less than or equal to 0, u is negatively correlated to v; when $\alpha$ tends to be 0, u tends to be independent of v.

The distribution function of wind and photovoltaic combined output is:

$$F'(x,y)=C(F'(x)F'(y)) \quad (13)$$

An inverse function of the distribution function of wind and photovoltaic combined output is calculated, to obtain a wind and photovoltaic combined output distribution:

$$P(x,y)= F'^{-1}(x,y) \quad (14)$$

At S24, an inverse function of the distribution function of wind and photovoltaic combined output is taken as a function for the distribution curve of wind and photovoltaic combined output.

Exemplarily, the distributed power supply digital twinning model is obtained according to the wind and photovoltaic combined output distribution:

$$P^t_{all}=P^t(x,y) \quad (15)$$

Here, t=1, 2,..., T, its value represents each period with an interval of 1 hour within T hours, $P^t_{all}$ represents output power in each period, and an output range of the distributed power supply digital twinning model is that, $P_{all}$ is greater than or equal to $P_{all}^{min}$ and less than or equal to $P_{all}^{max}$.

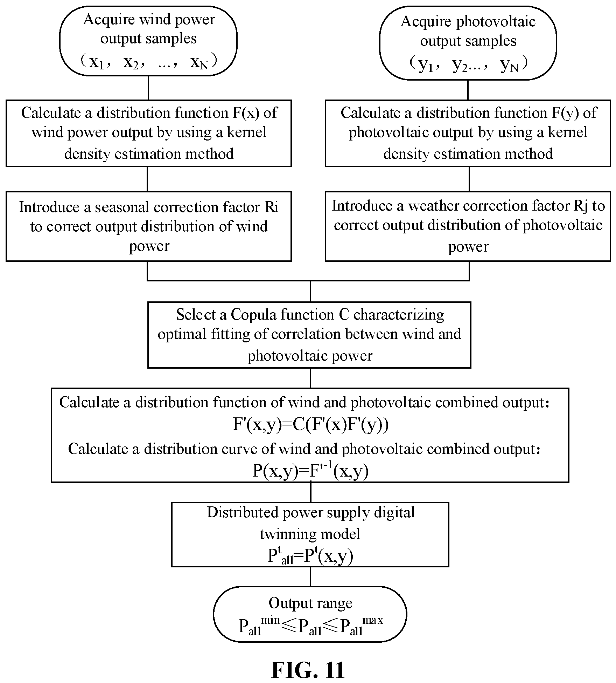

In summary, a process for modeling a digital twin of a distributed power supply of the embodiment of the application is shown in FIG. 11.

Exemplarily, the above operation of "establishing a response quantity prediction and evaluation model of an air-conditioner load in adjustable loads, for distributed flexible resources of an adjustable load micro-elements type" is implemented by the multi-objective energy flow regulation strategy module of the first embodiment, specifically as follows.

A thermodynamic equivalent model is used to describe a mathematical model of a single air conditioner. Assuming that an ambient temperature $T_{out}$ in a scheduling period is a constant temperature value, then when the air conditioner is turned off, a relationship between indoor and outdoor temperatures is as follows:

$$T_{in,t+1}=T_{out} -(T_{out} -T_{in,t})\varepsilon, \quad \varepsilon=e^{\frac{-\Delta t}{RC}} \quad (16)$$

Here, $T_{in, t+1}$ is indoor temperature at a next moment, $\Delta t$ is a time interval, R is an equivalent thermal resistance of a building, and C is an equivalent thermal capacity of the building.

When the air conditioner is turned on, a relationship between the indoor temperature and power of the air conditioner is as follows:

$$T_{in,t+1}=T_{out} -\eta PR-(T_{out} -\eta PR-T_{in,t})\varepsilon, \quad \varepsilon=e^{\frac{-\Delta t}{RC}} \quad (17)$$

Here, $\eta$ is an energy efficiency ratio of the air conditioner, and P is the power of the air conditioner.

Assuming that an indoor temperature variation limit is $\delta$, a lower limit of the indoor temperature is $T_{min}$, an upper limit of the indoor temperature is $T_{max}$, and a temperature value set by the air conditioner is $T_{set}$, relationships among the three items are as follows:

$$T_{min} = T_{set} - \delta/2 \quad (18)$$

$$T_{max} = T_{set} + \delta/2 \quad (19)$$

Assuming that ON time of the air conditioner is $t_1$, and OFF time of the air conditioner is $t_0$, upper and lower temperature limits are substituted into equations (16) and (17), and after iteration, we obtain:

$$T_{\max} = T_{out}(1 - \varepsilon^{t_0}) + T_{\min}\varepsilon^{t_0} \quad (20)$$

$$T_{\min} = (T_{out} - \eta PR)(1 - \varepsilon^{t_1}) + T_{\max}\varepsilon^{t_1} \quad (21)$$

Equations (18) and (19) are substituted into equations (20) and (21) to obtain:

$$t_0 = RC \, \mathrm{gln}\left(\frac{T_{set} - \delta/2 - T_{out}}{T_{set} + \delta/2 - T_{out}}\right) \quad (22)$$

$$t_1 = RC \, \mathrm{gln}\left(\frac{\eta PR + T_{set} + \delta/2 - T_{out}}{\eta PR + T_{set} - \delta/2 - T_{out}}\right) \quad (23)$$

Assuming that a probability where the air conditioner is in an ON state is represented by $P_{on}$, then:

$$P_{on} = \frac{t_1}{t_0 + t_1} \quad (24)$$

Equations (22) and (23) are substituted into the above equation, we may obtain by inequality variation:

$$\frac{T_{out} - T_{set} - \delta/2}{\eta PR} < P_{on} < \frac{T_{out} - T_{set} + \delta/2}{\eta PR} \quad (25)$$

Then, upper and lower power limits of the aggregated air conditioner are:

$$N\left(\frac{T_{out} - T_{set,eq} - \delta/2}{\eta_{eq} R_{eq}}\right) < NP_{on} < N\left(\frac{T_{out} - T_{set,eq} + \delta/2}{\eta_{eq} R_{eq}}\right) \quad (26)$$

Here, N is a number of air conditioners, $T_{set,eq}$ is an average value of set temperature, $\eta_{eq}$ is an average value of energy efficiency ratios of the air conditioners, and $R_{eq}$ is an average value of equivalent thermal resistances.

In an actual application, error is relatively small when approximate aggregated power is near a median of upper and lower limits, then aggregated total power of N air conditioners is:

$$P_{sum,AC} = N \left[ \frac{(T_{out} - T_{set,eq})}{\eta_{eq} R_{eq}} \right] \qquad (27)$$

A response potential for load curtailment is quantified by multiplying a power curtailment value within a response time by a demand response time, as a formula as follows:

$$S_{DR,AC} = \int_{t_{begin}}^{t_{over}} (P_{sum,AC} - P_t) d \qquad (28)$$

Here, $P_t$ is load power during curtailment, $t_{begin}$ is a start time of temperature regulation, $t_{over}$ is an end time of temperature regulation.

Exemplarily, the above operation of "establishing a micro-grid external characterist of a micro-grid micro-element type " is implemented by the multi-objective energy flow regulation strategy module of the first embodiment, specifically as follows.

The micro-grid is usually provided with only one grid-connection point, and energy exchange may be performed by controlling a tie line of the grid-connection point. The micro-grid is similar to an energy storage battery from external characteristics of the micro-grid, and purchasing and selling electricity to the micro-grid are similar to charging and discharging of the micro-grid. The virtual electricity quantity of the micro-grid characterizes the external characteristic model thereof.

$$\begin{cases} W_{MG}(t+1) = W_{MG}(t) + \eta_{MG} P_{MG.c}(t) \cdot \Delta t & \left( \text{selling electricity to micro-grid} \right) \\ W_{MG}(t+1) = W_{MG}(t) - \eta_{MG} P_{MG.d}(t) \cdot \Delta t & \left( \text{purchasing electricity from micro-grid} \right) \end{cases} \qquad (29)$$

Here, $W_{MG}(t+1)$ is a virtual electricity quantity after the micro-grid purchases and sells electricity, $W_{MG}(t)$ is a virtual electricity quantity before the micro-grid purchases and sells electricity, and $\eta_{MG}$ is an electric energy loss rate of the tie line.

During scheduling, electric energy reserve quantity of the micro-grid, i.e., the virtual electricity quantity is not unlimited, and is affected by capabilities of resources of the micro-grid itself participating in response. Therefore, there are limitations:

$$\underline{W_{MG}} < W_{MG}(t) < \overline{W_{MG}} \qquad (30)$$

$$0 \le P_{MG.c}(t) < \overline{P_{MG}}, 0 \le P_{MG.d} < \overline{P_{MG}} \qquad (31)$$

Here, $\underline{W_{MG}}$ and $\overline{W_{MG}}$ are lower limit and upper limit of the virtual electricity quantity of the micro-grid, which are determined by micro-elements and adjustable loads in the micro-grid, $\overline{P_{MG}}$ is an upper limit of transmission power of the tie line.

Furthermore, it is necessary to maintain that it is impossible to purchase and sell electricity to the micro-grid at any moment, that is,

$$P_{MG.c}(t)*P_{MG.d}(t)=0 \qquad (32)$$

At S12, a comprehensive objective function including economy, low carbon and low fluctuation, and a real-time power balance constraint condition and a resource response quantity constraint condition are established in combination with the model of each type of the distributed flexible resources.

Exemplarily, operations S12 and S13 of the embodiment of the application are implemented by the multi-objective energy flow regulation strategy module of the first embodiment. In the multi-objective energy flow regulation strategy, external characteristics of the micro-grid containing multiple flexible resources are modeled in a micro-element manner, and means for purchasing and selling electricity to the micro-grid are added, the micro-grid external characteristic model based on virtual electricity quantity is established, introduction of economy, low carbon and low fluctuation is considered to form the comprehensive objective function, constraint conditions include real-time power constraint and resource response quantity constraint, optimal solving is performed by an improved particle swarm algorithm combining sparrow search and beetle antennae search (BAS), to obtain a final energy flow regulation result. This strategy aggregates many types of resources, has complex objective functions, and fast and efficient solving algorithms, which may efficiently and quickly perform economical, low-carbon and stable regulation of massive resources.

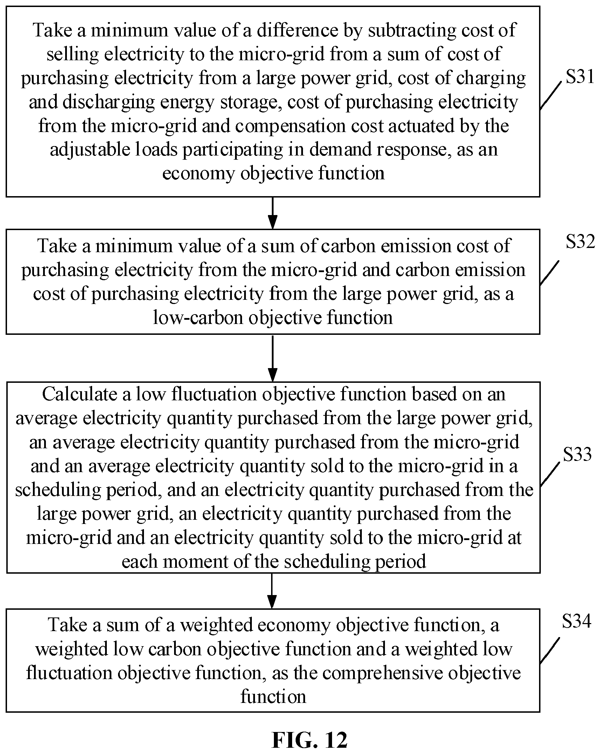

Exemplarily, as shown in FIG. 12, the process of establishing the comprehensive objective function is implemented by operations S31 to S34, specifically as follows.

At S31, a minimum value of a difference by subtracting cost of selling electricity to the micro-grid from a sum of cost of purchasing electricity from a large power grid, cost of charging and discharging energy storage, cost of purchasing electricity from the micro-grid and compensation cost actuated by the adjustable loads participating in demand response, is taken as an economy objective function.

Exemplarily, the economy objective function is specifically represented as minimizing electricity cost, and ignoring operation cost of distributed power supplies, the electricity cost includes cost of purchasing electricity from the large power grid $C_L$, cost of charging and discharging energy storage $C_{ES}$, cost of purchasing electricity from the micro-grid $C_{MG,b}$, cost of selling electricity to the micro-grid $C_{MG,s}$, and compensation cost actuated by the adjustable loads participating in demand response; $C_{DR}$.

$$C_1 = \min(C_L + C_{ES} + C_{MG,b} + C_{DR} - C_{MG,s}) \qquad (33)$$

1) The cost of purchasing electricity from the large power grid is as follows:

$$C_L = \sum_{t=1}^{T} P_C(t)c(t) \qquad (34)$$

Here, $P_C(t)$ is an electricity quantity purchased from the large power grid at t moment, c(t) is an electricity purchasing price at t moment and varies dynamically, and T is a scheduling period.

2) Let the cost of charging and discharging energy storage have a linear relationship with charging and discharging power $P_{ES}(t)$ at t moment, then the cost of charging and discharging energy storage is as follows:

$$C_{ES} = \sum_{t=1}^{T} |P_{ES}(t)|c_{ES} \qquad (35)$$

Here, $C_{ES}$ is a cost coefficient of charging and discharging energy storage.

3) The cost of purchasing electricity from the micro-grid:

$$C_{MG,b} = \sum_{t=1}^{T} P_{MG,b}(t) c_{MG,b} \tag{36}$$

Here, $C_{MG,b}$ is a cost coefficient of purchasing electricity from the micro-grid, and $P_{MG,b}(t)$ is power of purchasing electricity from the micro-grid at t moment.

4) The cost of selling electricity to the micro-grid:

$$C_{MG,s} = \sum_{t=1}^{T} P_{MG,s}(t) c_{MG,s} \tag{37}$$

Here, $C_{MG,s}$ is a cost coefficient of selling electricity to the micro-grid, and $P_{MG,s}(t)$ is power of selling electricity to the micro-grid at t moment.

5) The compensation cost actuated by demand response is as follows:

$$C_{DR} = \sum_{t=1}^{T} P_{DR}(t) c_{DR} \tag{38}$$

In the formula, $C_{DR}$ is a unit compensation cost actuated by demand response, and $P_{DR}(t)$ is demand response power of the adjustable load.

At S32, a minimum value of a sum of carbon emission cost of purchasing electricity from the micro-grid and carbon emission cost of purchasing electricity from the large power grid, is taken as a low-carbon objective function.

Exemplarily, since carbon emission mainly comes from electricity quantity purchased from the large power grid, purchasing electricity from the large power grid should be appropriately reduced from the perspective of carbon reduction, to increase internal energy utilization while reducing overall carbon emission. Furthermore, considering that part of micro-grids contain micro-gas turbines, gas boilers and other devices, factors of pollutants emitted by the micro-grid are considered into the low-carbon objective function when electricity is purchased from the micro-grid.

$$C_2 = \min(f_{MG} P_{MG,b}(t) + f_C P_C(t)) \tag{39}$$

Here, $f_{MG}$ is a carbon emission cost coefficient of the micro-grid caused by micro-gas turbines, gas boilers and other devices in the micro-grid, and $f_C$ is a carbon emission cost coefficient of the large power grid.

The carbon emission cost coefficient of the large power grid is not a fixed parameter, and its value varies dynamically in a scheduling period, that is, a variation law of $f_C$ is related to electricity price of the large power grid to a certain extent.

Electric power purchased from the large power grid may be considered as being obtained by subtracting load power of the large power grid from new energies dominated by wind and photovoltaic power and traditional power generation dominated by thermal power units. Due to complementarity between wind and photovoltaic power, generated power of new energies dominated by wind and photovoltaic power does not vary significantly in the scheduling period, while load of the large power grid fluctuates greatly in the scheduling period, variation of electricity price is a concrete representation of load variation of the large power grid. Therefore, from an overall perspective, purchasing electricity from the large power grid during scheduling may be equivalent to being mainly provided by traditional units generating major carbon emission, Therefore, a correlation coefficient is used to represent the electricity price of the large power grid and power of power generation units generating carbon emission.

$$f_C(t) = \delta c(t) \tag{40}$$

$\delta$ is a correlation coefficient between electricity price c(t) of the large power grid and a carbon emission cost coefficient $f_C$(t) of the large power grid.

At S33, a low fluctuation objective function is calculated based on an average electricity quantity purchased from the large power grid, an average electricity quantity purchased from the micro-grid and an average electricity quantity sold to the micro-grid in a scheduling period, and an electricity quantity purchased from the large power grid, an electricity quantity purchased from the micro-grid and an electricity quantity sold to the micro-grid at each moment of the scheduling period.

Low fluctuation means ensuring self-balance of adjusted resources as much as possible, to reduce purchasing electricity from the large power grid and purchasing and selling electricity to the micro-grid, so as to reduce fluctuation of overall power of the adjusted resources, and improve efficiency of resource utilization, which is represented by minimizing a standard deviation of purchasing and selling electricity quantity:

$$C_3 = \min\left(\frac{1}{T}\sum_{t=1}^{T}(P_C(t) - \overline{P_C})^2 + \frac{1}{T}\sum_{t=1}^{T}(P_{MG,b}(t) - \overline{P_{MG,b}})^2 + \frac{1}{T}\sum_{t=1}^{T}(P_{MG,s}(t) - \overline{P_{MG,s}})^2\right) \tag{41}$$

Here, $\overline{P_C}$ is an average electricity quantity purchased from the large power grid in each period, that is,

$$(1/T)\sum_{t=1}^{T} P_C(t) ;$$

$\overline{P_{MG,b}}$ is an average electricity quantity purchased from the micro-grid in each period, that is,

$$(1/T)\sum_{t=1}^{T} P_{MG,b}(t) ;$$

$$(1/T)\sum_{t=1}^{T} P_{MG,s}(t) .$$

$\overline{P_{MG,s}}$ is an average electricity quantity sold to the micro-grid in each period, that is,

At S34, a sum of a weighted economy objective function, a weighted low carbon objective function and a weighted low fluctuation objective function is taken as the comprehensive objective function.

Exemplarily, three indicators of economy, low carbon and low fluctuation are comprehensively considered into regulation objectives, and the three indicators are combined through penalty factors to form a multi-objective function. Compared to traditional single-objective and dual-objective regulation, the regulation objectives of the application consider regulation cost, carbon emission and fluctuation, and may improve resource utilization, regulation cost and environmental benefit under a premise of achieving stable operation. The low-carbon objective function considering the correlation coefficient between electricity price and carbon emission makes the carbon emission cost coefficient which was originally a fixed value vary dynamically, and combines it with dynamic electricity price of the large power grid by using the correlation coefficient, to increase low-carbon of the regulation result and make the environmental benefit better.

The comprehensive objective function is:

$$C = \alpha_1 C_1 + \alpha_2 C_2 + \alpha_3 C_3 \tag{42}$$

In the formula, $\alpha 1$, $\alpha 2$, $\alpha 3$ are penalty factors (weight values).

Exemplarily, the process of establishing the real-time power balance constraint condition may include the following operations. A difference between a sum of the electricity quantity purchased from the large power grid, power of wind and photovoltaic combined output, discharging power of the energy storage micro-elements and the electricity quantity purchased from the micro-grid at each moment, and a sum of the electricity quantity sold to the micro-grid and charging power of the energy storage micro-elements is solved, and the difference is taken as a first calculated value. A difference between a total predicted load demand quantity and demand response power of the adjustable loads is taken as a second calculated value. The first calculated value is controlled to be equal to the second calculated value, as the real-time power balance constraint condition. Based on the above, the real-time power balance constraint condition is:

$$P_C(t) + P_{All}(t) + P_{ES,c}(t) + P_{MG,b}(t) - [P_{MG,s}(t) + P_{ES,d}(t)] = P_L(t) - P_{DR}(t) \qquad (43)$$

Here, $P_L(t)$ is the total predicted load demand quantity; $P_{All}(t)$ is power of wind and photovoltaic combined output at t moment; $P_{ES,c}(t)$ is discharging power of the energy storage micro-elements at t moment; $P_{ES,d}(t)$ is charging power of the energy storage micro-elements at t moment.

Exemplarily, the process of establishing the resource response quantity constraint condition may include the following operations.

1) A micro-grid external characteristic model based on virtual electricity quantity is taken as a response quantity constraint condition of the micro-grid, please refer to equations (29) to (31) for the details.

2) Charging/discharging power constraint conditions of the energy storage micro-elements are set by using rated power of the energy storage micro-elements, and charge quantity constraint conditions of the energy storage micro-elements are set by using upper and lower limits of charge states of the energy storage micro-elements, specifically as follows.

Charging/discharging power constraint conditions of an energy storage apparatus:

$$\left| P_{ES}(t) \right| \le P_{ES\_rat} \qquad (44)$$

In the formula, $P_{ES\_rat}$ is rated power of the energy storage apparatus.

Constraint to be met by an energy storage charge quantity $Q_{ES}(t)$ is:

$$Q_{ES\_rat} SOC_{ES\_min} \le Q_{ES}(t) \le Q_{ES\_rat} SOC_{ES\_max} \qquad (45)$$

In the formula, $Q_{ES\_rat}$ is a rated charge quantity of the energy storage apparatus; $SOC_{ES\_min}$ and $SOC_{ES\_max}$ are upper and lower limits of charge states of an energy storage system. In order to ensure continuity of periodic scheduling, initial charge state of energy storage should be kept consistent in each scheduling period, that is:

$$Q_{ES}(0) = Q_{ES}(T) \qquad (46)$$

3) Demand response power of the adjustable loads are controlled to be less than or equal to a total predicted amount of response potentials of the adjustable loads, and the demand response power of the adjustable loads are controlled to be equal to or greater than zero, as response quantity constraint conditions of the adjustable loads. A response quantity constraint of the adjustable loads is:

$$0 \le P_{DR}(t) \le P_{DR,sum}(t) \qquad (47)$$

In the formula, $P_{DR,sum}(t)$ is a total predicted amount of response potentials of the adjustable loads at t moment.

At S13, a comprehensive objective function is optimally solving based on the real-time power balance constraint condition and the resource response quantity constraint condition, to obtain a power scheduling result in each response period.

Exemplarily, there are problem of local search capability and insufficient accuracy in traditional particle algorithms. The idea of sparrow search is introduced, and search capability of an explorer sparrow is given to part of particles by using characteristics of the explorer sparrow's large search range and quick update, to achieve guiding a particle swarm to converge quickly. Furthermore, an optimization process of the particle swarm algorithm focuses on influence of a group on single particle, while ignores determination of the particle itself, thus not only relies on a historical optimal solution and an optimal solution of the swarm, but also introduces the idea of BAS in each iteration when position of the particle is updated. That is, left and right fitness function values of the particle are compared, to update position information, which may overcome deficiency that particle swarm optimization is easy to fall into local optimum, and enhance a global optimization capability.

In the embodiment of the application, the optimization model is solved by using the improved particle swarm optimization solving algorithm combining sparrow search and BAS, the search capability is given to explorer particles by using characteristics of the explorer sparrow's large search range in the sparrow algorithm. Influence factors generated by follower particles are substituted into a particle speed update mechanism, and the follower particles have self-determination capabilities of the beetle antennae in BAS. Left and right antenna are compared, a beetle antennae speed update mechanism characterizing such capability is also substituted into the particle speed update mechanism, which may avoid over-reliance on individual and global optimal results on the basis of expanding the search range, and improve deficiency that traditional particle swarm algorithms are easy to fall into local optimum.

Optimization operations of the algorithm are as follows.

1) Parameters of the algorithm are initialized, particles are divided into explorer particles and follower particles by using the idea of sparrow search, and a proportion of the two types of particles is determined according to a proportional coefficient a.

$$a = \frac{X_{best}}{X_{worst}} = \frac{PN}{N-PN} \qquad (48)$$

Here, $X_{best}$ is PN sparrows with better positions in the swarm, that is, the explorer particles, and $X_{worst}$ is N-PN sparrows with poor positions in the swarm, that is, the follower particles.

2) Assuming that early warning values of the explorer particles are always less than a safe value, at this time, the explorer particles are equivalent to explorer sparrows to perform a large-scale jumping search. Position update expressions of the explorer particles are updated according to the explorer sparrows' position update formulas when the early warning value is always less than the safe value.

$$x_{i,j}^{t+1} = x_{i,j}^{t} \exp(\frac{-i}{\alpha \cdot iter_{max}}) \qquad (49)$$

Here, $x_{i,j}^{t}$ is a position of an i-th particle at a j-th dimension in a t-th iteration, $\alpha$ is a random number between (0,1], and $iter_{MAX}$ is a maximum number of iterations.

3) According to guidance of the explorer particles, an influence factor r is generated for other follower particles, to change influences of past positions and speeds of the particles on the present.

$$r = \frac{1}{\alpha \cdot iter_{max}} \qquad (50)$$

4) The idea of BAS is introduced, to calculate left distance and left fitness function as well as right distance and right fitness function of each particle, and use a speed update rule in BAS to apply it to a particle speed update formula with BAS capability:

$$vbi = -\delta^t \cdot \overset{1}{b} \cdot sign(f(x_{rt}) - f(x_{lt}))$$  (51)

Here, *vbi* is an update speed of a particle with BAS capability, $\delta^t$ is a step size of the t-th iteration,

$$\overset{1}{b}$$

is a standardized random vector representing a random orientation of the particle, *sign* is a sign function, $f(x_{rt})$ is a right antennae fitness function value of the particle, $f(x_{lt})$ is a left antennae fitness function value of the particle.

5) A current speed update rule of each follower particle is obtained by combining the above two searches and a speed update rule of the particle swarm algorithm itself

$$v_i^{t+1} = r \cdot \omega \cdot v_i^t + c_1 \cdot rand \cdot (p_i^t - x_i^t) + c_2 \cdot rand \cdot (p_g^t - x_i^t) + c_2 \cdot rand \cdot vbi$$  (52)

Here, $v_i^{t+1}$ is a speed of the i-th particle after the t-th iteration, $\omega$ is an inertia weight, $c_1$, $c_2$, $c_3$ are acceleration factors, *rand* is a random function, $p_i^t$ is an individual fitness extreme value of the i-th particle, $p_g^t$ is a group fitness extreme value of a current swarm.

Then, positions of the follower particles are updated:

$$x_i^{t+1} = x_i^t + v_i^{t+1}$$  (53)

6) It is determined whether the maximum number of iterations is reached, a result is output when the maximum number of iterations is reached; otherwise, operation 5) is repeated, until the maximum number of iterations is reached.

It is apparent that the above embodiments are merely examples made for clear descriptions, rather than limitation to the implementations. Variations or modifications in other different forms may also be made by those of ordinary skill in the art based on the above descriptions. It is unnecessary to and cannot list all implementations exhaustively here. Furthermore, apparent variations or modifications derived therefrom still fall within the scope of protection of the application.

**Claims**

1. An aggregation control apparatus for distributed flexible resources, comprising a communication unit and a processing control unit,

   wherein the processing control unit achieves uplink (UL) connection and downlink (DL) connection through the communication unit, and is connectable to processing control units of other aggregation control apparatuses for distributed flexible resources through the communication unit, to achieve an edge ad-hoc network,
   the processing control unit is configured to support scheduling and control services to achieve real-time demand response, low-power consumption massive-scale deployment, and intelligent grid-connection/disconnection of micro-grid;

the processing control unit is further configured to: establish a model of each type of the distributed flexible resources, and establish a comprehensive objective function comprising economy, low carbon and low fluctuation, and a real-time power balance constraint condition and a resource response quantity constraint condition in conjunction with the model of each type of the distributed flexible resources; optimally solve the comprehensive objective function based on the real-time power balance constraint condition and the resource response quantity constraint condition, to obtain a power scheduling result in each response period; and schedule the distributed flexible resources based on the scheduling result.

2. The aggregation control apparatus for distributed flexible resources of claim 1, wherein the communication unit comprises a plurality of types of communication modules,

the distributed flexible resources are directly connectable to corresponding types of communication modules, or connectable to the corresponding types of communication modules through an execution terminal, or connectable to the corresponding types of communication modules through a local local-area autonomous system; all the communication modules are connected to the processing control unit.

3. The aggregation control apparatus for distributed flexible resources of claim 2, wherein the processing control unit comprises an energy flow regulation module and a communication control module,

the energy flow regulation module is directly or indirectly connectable to the distributed flexible resources, and is connectable to an UL service system platform and an apparatus management system, and the energy flow regulation module is configured to:

establish the model of each type of the distributed flexible resources, and establish the comprehensive objective function comprising economy, low carbon and low fluctuation, and the real-time power balance constraint condition and the resource response quantity constraint condition in combination with the model of each type of the distributed flexible resources; and optimally solve the comprehensive objective function based on the real-time power balance constraint condition and the resource response quantity constraint condition, to obtain the power scheduling result in each response period,

the communication control module is directly or indirectly connectable to the distributed flexible resources, and is connectable to the energy flow regulation module, and the communication control module is configured to: support the real-time demand response of the scheduling and control services, the low-power consumption massive-scale deployment, and the intelligent grid-connection/disconnection of the micro-grid; and schedule the distributed flexible resources according to the scheduling result.

4. The aggregation control apparatus for distributed flexible resources of claim 3, wherein the energy flow regulation module comprises a distributed power supply twinning model module, a resource clustering model module, a multi-objective energy flow regulation strategy module, and an external parameter input module,

the distributed power supply twinning model module is configured to construct a distributed power supply digital twinning model for distributed flexible resources of connected wind and photovoltaic micro-elements based on weather information and seasonal information input by external parameters, to obtain a distribution curve of wind and photovoltaic combined output,

the resource clustering model module is configured to cluster connected massive distributed flexible resources to obtain a plurality of types of distributed flexible resources,

the multi-objective energy flow regulation strategy module is configured to: establish the comprehensive objective function comprising economy, low carbon and low fluctuation, and the real-time power balance constraint condition and the resource response quantity constraint condition in conjunction with the model of each type of the distributed flexible resources and electricity price information input by the external parameter input module; and optimally solve the comprehensive objective function based on the real-time power balance constraint condition and the resource response quantity constraint condition, to obtain the power scheduling result in each response period.

5. The aggregation control apparatus for distributed flexible resources of claim 4, wherein the communication control module comprises a delay measurement and control module, an intelligent sleep module, a self-learning intelligent decision-making networking module, and a hardware dual-channel host/standby separation control communication module,

the delay measurement and control module is configured to: capture data packets of a data link layer in real time, perform layer-by-layer header parsing operations on the data packets, and send the data packets to an application layer for processing, to obtain processed data packets; and perform protocol analysis, Internet Protocol (IP) address analysis and port analysis on the processed data packets at a network layer and the application layer; set a highest control authority for a specific control packet, prioritize processing and forwarding the specific control packet, construct a delay accurate control and measurement algorithm, measure delay information, print the delay information to the data packets, recalculate check values of headers of analyzed data packets, and output the check values to a target device,

the intelligent sleep module is configured to establish a power consumption model of the communication unit in real time, and schedule the communication module in real time based on the power consumption model of the communication unit, according to a service interaction frequency and through an intelligent sleep algorithm, to achieve optimization of energy consumption,

the self-learning intelligent decision-making networking module is configured to:

regularly sense, monitor and issue apparatus state packets, elect a master gateway device when there is a grid-connection/disconnection demand, and perform identity registration to all processing control units in the network after successfully electing the master gateway device;

achieve self-election of the master gateway device by taking network characteristic values as a determination basis and through an intelligent decision-making algorithm, and dynamically control input or output of distributed flexible resources in an area; and perform grid-connection/disconnection management of devices, the master gateway device recalculates and

modifies micro-grid characteristic values according to an output result of the intelligent decision-making algorithm, and other slave devices execute a slave device strategy,

the hardware dual-channel host/standby separation control communication module is configured to: exchange high-speed big data and low-speed control instructions with a master station and other processing control units; monitor rate and abnormal conditions of a main data channel and corresponding requests of a control channel, and issue communication resource scheduling and control instructions to perform communication resource scheduling, the gateway side responds thereto and dynamically switches host/standby control/data transmission channels; analyze real power consumption of each onboard module, establish a corresponding model for scheduling and control, maintain persistent connection between a terminal and a service side through the control channel, and transmit an energy consumption control demand through the control channel, the service side regularly or dynamically adjusts an operation or sleep state of each power consumption module of the terminal or the whole device according to service transmission demands.

6. The aggregation control apparatus for distributed flexible resources of claim 5, further comprising:

a clock module, configured to provide a clock signal for the intelligent sleep module to wake up a corresponding communication module regularly;

a storage module, configured to store operation instructions and data information of the processing control unit; and

a power supply module, configured to supply power to the processing control unit, the communication unit, the storage module and the clock module.

7. An aggregation control method for distributed flexible resources, based on the aggregation control apparatus for distributed flexible resources of claim 6, the method comprising:

clustering connected massive distributed flexible resources to obtain a plurality of types of distributed flexible resources, and modeling each type of the distributed flexible resources in a micro-element manner to obtain a model of each type of the distributed flexible resources;

establishing a comprehensive objective function comprising economy, low carbon and low fluctuation, and a real-time power balance constraint condition and a resource response quantity constraint condition in conjunction with the model of each type of the distributed flexible resources; and

optimally solving the comprehensive objective function based on the real-time power balance constraint condition and the resource response quantity constraint condition, to obtain a power scheduling result in each response period.

8. The aggregation control method for distributed flexible resources of claim 7, wherein modeling each type of the distributed flexible resources in the micro-element manner to obtain the model of each type of the distributed flexible resources comprises:

dividing the plurality of types of distributed flexible resources into source characteristic micro-elements and load characteristic micro-elements;
modeling distributed flexible resources of an energy storage micro-element type with reference to distributed power supplies or distributed loads;
constructing a distributed power supply digital twinning model for distributed flexible resources of a wind-and-photovoltaic micro-element type, to obtain a distribution curve of wind and photovoltaic combined output;
establishing a micro-grid external characteristic model based on virtual electricity quantity, for distributed flexible resources of a micro-grid micro-element type; and
establishing a response quantity prediction and evaluation model of an air-conditioner load in adjustable loads, for distributed flexible resources of an adjustable load micro-element type.

9. The aggregation control method for distributed flexible resources of claim 8, wherein constructing the distributed power supply digital twinning model to obtain the distribution curve of wind and photovoltaic combined output comprises:

describing a wind power output model and a photovoltaic output model respectively based on acquired wind power output samples and photovoltaic output samples and by using a kernel density estimation method, and calculating a distribution function of wind power output and a distribution function of photovoltaic output;
introducing a seasonal correction factor to correct the distribution function of wind power output, and introducing a weather correction factor to correct the distribution function of photovoltaic output;
modeling correlation of wind and photovoltaic combined output based on a corrected distribution function of wind power output and a corrected distribution function of photovoltaic output, and calculating a distribution function of wind and photovoltaic combined output; and
taking an inverse function of the distribution function of wind and photovoltaic combined output as a function for the distribution curve of wind and photovoltaic combined output.

10. The aggregation control method for distributed flexible resources of claim 9, wherein establishing the comprehensive objective function comprises:

taking a minimum value of a difference by subtracting cost of selling electricity to the micro-grid from a sum of cost of purchasing electricity from a large power grid, cost of charging and discharging energy storage, cost of purchasing electricity from the micro-grid and compensation cost actuated by the adjustable loads participating in demand response, as a economy objective function; taking a minimum value of a sum of carbon emission cost of purchasing electricity from the micro-grid and carbon emission cost of purchasing electricity from the large power grid, as a low-carbon objective function;
calculating a low fluctuation objective function based on an average electricity quantity purchased from the large power grid, an average electricity quantity purchased from the micro-grid and an average electricity quantity sold to the micro-grid in a scheduling period, and an electricity quantity purchased from the large power grid, an electricity quantity purchased from the micro-grid and an electricity quantity sold to the micro-grid at each moment of the scheduling period; and
taking a sum of a weighted economy objective function, a weighted low carbon objective function and a weighted low fluctuation objective function as the comprehensive objective function.

11. The aggregation control method for distributed flexible resources of claim 10, wherein establishing the real-time power balance constraint condition comprises:

solving a difference between a sum of the electricity quantity purchased from the large power grid, power of wind and photovoltaic combined output, discharging power of the energy storage micro-elements and the electricity quantity purchased from the micro-grid at each moment, and a sum of the electricity quantity sold to the micro-grid and charging power of the energy storage micro-elements, and taking the difference as a first calculated value;
taking a difference between a total predicted load demand quantity and demand response power of the adjustable loads as a second calculated value; and
controlling the first calculated value to be equal to the second calculated value, as the real-time power balance constraint condition.

12. The aggregation control method for distributed flexible resources of claim 10, wherein establishing the resource response quantity constraint condition comprises:

taking a micro-grid external characteristic model based on virtual electricity quantity as a response quantity constraint condition of the micro-grid;
setting charging/discharging power constraint conditions of the energy storage micro-elements by using rated power of the energy storage micro-elements, and setting charge quantity constraint conditions of the energy storage micro-elements by using upper and lower limits of charge states of the energy storage micro-elements; and
controlling demand response power of the adjustable loads to be less than or equal to a total predicted amount of response potentials of the adjustable loads, and controlling the demand response power of the adjustable loads to be equal to or greater than zero, as response quantity constraint conditions of the adjustable loads.

13. The aggregation control method for distributed flexible resources of claim 12, wherein the comprehensive objective function is optimally solved by using an improved particle swarm optimization solving algorithm combining sparrow search and beetle antennae search (BAS), in combination with the real-time power balance constraint condition and the resource response quantity constraint condition.

Distributed flexible resource — Processing control unit

Distributed flexible resource — Local area autonomous system — Communication unit — Processing control unit

UL service system platform — Distributed flexible resource — Apparatus management system

## FIG. 1

Aggregation control apparatus

5G communication module

4G communication module

Ethernet communication module

RS232/485 module

LPWA module

Processing control unit

Energy flow regulation module

Distributed power supply twinning model module

Resource clustering model module

Multi-objective energy flow regulation strategy module

Other external parameter input modules (such as weather information, electricity price information)

Communication control module

Delay measurement and control module | Intelligent sleep module | Self-learning intelligent decision-making networking module

Hardware dual-channel host/standby separation control communication module

Power supply module

Clock module

Memory module

I/O bus module

## FIG. 2

UL service system platform

Apparatus management system

4G/5G、GE

4G/5G、FE

Aggregation control apparatus

Lpwa

Aggregation control apparatus

Lpwa

Aggregation control apparatus

FE

FE、
RS232/485

I/O、
RS232/485

Local-area autonomous system

Execution terminal

Distributed resource

Distributed resource

Distributed resource

**FIG. 3**

Data packet receiving

Data packet forwarding

Data packet capturing/ sending

Protocol analysis

Delay processing module

Right control

Delay marker

Packet check and recombination

Data packet recombination

Delay calculation and evaluation

Packet analysis

Processor module

Service prioritized processing channel

**FIG. 4**

**FIG. 5**

**FIG. 6**

**FIG. 7**

**FIG. 8**

Cluster connected massive distributed flexible resources to obtain multiple types of distributed flexible resources, and model each type of the distributed flexible resources in a micro-element manner to obtain a model of each type of the distributed flexible resources

S11

Establish a comprehensive objective function including economy, low carbon and low fluctuation, and a real-time power balance constraint condition and a resource response quantity constraint condition, in combination with the model of each type of the distributed flexible resources

S12

Optimally solve a comprehensive objective function based on the real-time power balance constraint condition and the resource response quantity constraint condition, to obtain a power scheduling result in each response period

S13

**FIG. 9**

| Describe a wind power output model and a photovoltaic output model respectively based on acquired wind power output samples and photovoltaic output samples by using a kernel density estimation method, and calculate a distribution function of wind power output and a distribution function of photovoltaic output | S21 |

| Introduce a seasonal correction factor to correct the distribution function of wind power output, and introduce a weather correction factor to correct the distribution function of photovoltaic output | S22 |

| Model correlation of wind and photovoltaic combined output based on a corrected distribution function of wind power output and a corrected distribution function of photovoltaic output, and calculate a distribution function of wind and photovoltaic combined output | S23 |

| Take an inverse function of the distribution function of wind and photovoltaic combined output as a function for the distribution curve of wind and photovoltaic combined output | S24 |

**FIG. 10**

Acquire wind power
output samples
$(x_1, x_2, ..., x_N)$

Acquire photovoltaic
output samples
$(y_1, y_2..., y_N)$

Calculate a distribution function F(x) of
wind power output by using a kernel
density estimation method

Calculate a distribution function F(y) of
photovoltaic output by using a kernel
density estimation method

Introduce a seasonal correction factor Ri
to correct output distribution of wind
power

Introduce a weather correction factor Rj to
correct output distribution of photovoltaic
power

Select a Copula function C characterizing
optimal fitting of correlation between wind and
photovoltaic power

Calculate a distribution function of wind and photovoltaic combined output:
$$F'(x,y)=C(F'(x)F'(y))$$
Calculate a distribution curve of wind and photovoltaic combined output:
$$P(x,y)=F'^{-1}(x,y)$$

Distributed power supply digital
twinning model
$$P^t_{all}=P^t(x,y)$$

Output range
$$P_{all}^{min} \leqslant P_{all} \leqslant P_{all}^{max}$$

## FIG. 11

Take a minimum value of a difference by subtracting cost of selling electricity to the micro-grid from a sum of cost of purchasing electricity from a large power grid, cost of charging and discharging energy storage, cost of purchasing electricity from the micro-grid and compensation cost actuated by the adjustable loads participating in demand response, as an economy objective function

S31

Take a minimum value of a sum of carbon emission cost of purchasing electricity from the micro-grid and carbon emission cost of purchasing electricity from the large power grid, as a low-carbon objective function

S32

Calculate a low fluctuation objective function based on an average electricity quantity purchased from the large power grid, an average electricity quantity purchased from the micro-grid and an average electricity quantity sold to the micro-grid in a scheduling period, and an electricity quantity purchased from the large power grid, an electricity quantity purchased from the micro-grid and an electricity quantity sold to the micro-grid at each moment of the scheduling period

S33

Take a sum of a weighted economy objective function, a weighted low carbon objective function and a weighted low fluctuation objective function, as the comprehensive objective function

S34

**FIG. 12**

## INTERNATIONAL SEARCH REPORT

| International application No. |
| --- |
| **PCT/CN2022/106680** |

| A. | CLASSIFICATION OF SUBJECT MATTER |
| --- | --- |

H02J 3/00(2006.01)i

According to International Patent Classification (IPC) or to both national classification and IPC

| B. | FIELDS SEARCHED |
| --- | --- |

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNTXT, DWPI, ENTXT, CNKI: 分布式, 资源, 控制, 调度, 处理, 通信, 连接, 需求, 响应, 目标函数, 约束, distributed, resource, control, process, connect, communication, demand response, objective function, constraint

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114221357 A (SHANGHAI UNIVERSITY OF ELECTRIC POWER) 22 March 2022 (2022-03-22)<br>description, paragraphs 5-129, and figures 1-3 | 1-13 |
| PX | CN 114498641 A (STATE GRID SMART GRID RESEARCH INSTITUTE CO., LTD.) 13 May 2022 (2022-05-13)<br>claims 1-13 | 1-13 |
| A | CN 111030188 A (YUNNAN POWER GRID CO., LTD. ELECTRIC POWER RESEARCH INSTITUTE) 17 April 2020 (2020-04-17)<br>entire document | 1-13 |
| A | US 2018088616 A1 (SIEMENS AKTIENGESELLSCHAFT) 29 March 2018 (2018-03-29)<br>entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 January 2023** | **11 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/106680**

| Patent document cited in search report | | | Publication date (day/month/year) | Patent family member(s) | | | Publication date (day/month/year) |
|---|---|---|---|---|---|---|---|
| CN | 114221357 | A | 22 March 2022 | None | | | |
| CN | 114498641 | A | 13 May 2022 | CN | 114498641 | B | 24 June 2022 |
| CN | 111030188 | A | 17 April 2020 | None | | | |
| US | 2018088616 | A1 | 29 March 2018 | US | 10152076 | B2 | 11 December 2018 |
| | | | | EP | 3301635 | A1 | 04 April 2018 |

Form PCT/ISA/210 (patent family annex) (January 2015)

**REFERENCES CITED IN THE DESCRIPTION**

**Patent documents cited in the description**

- CN 202210401812